# NEUE EUROPÄISCHE PATENTSCHRIFT

(11) **EP 4 093 571 B2**
(45) Veröffentlichungstag und Bekanntmachung des Hinweises auf die Entscheidung über den Einspruch: **09.12.2026**
(45) Hinweis auf die Patenterteilung: 15.11.2023
(21) Anmeldenummer: 20743686.6
(22) Anmeldetag: 21.07.2020
(51) Int. Cl.: B23F 15/00, B23F 5/04, B23F 23/12, B23F 23/00, G05B 19/18

(54) **VERFAHREN ZUM BEARBEITEN EINES WERKSTÜCKS MIT ZWEI VERZAHNUNGEN, POSITIONIERVORRICHTUNG ZUM ERMITTELN EINER REFERENZDREHWINKELLAGE DES WERKSTÜCKS UND WERKZEUGMASCHINE MIT EINER DERARTIGEN POSITIONIERVORRICHTUNG**
METHOD FOR WORKING A WORKPIECE WITH TWO TOOTHINGS, POSITIONING DEVICE FOR DETERMINING A REFERENCE ROTATIONAL ANGLE POSITION OF THE WORKPIECE AND POWER TOOL WITH SUCH A POSITIONING DEVICE
PROCÉDÉ POUR USINER UNE PIÈCE PRÉSENTANT DEUX DENTURES, DISPOSITIF DE POSITIONNEMENT POUR DÉTERMINER UNE POSITION D'ANGLE DE ROTATION DE RÉFÉRENCE DE LA PIÈCE ET MACHINE-OUTIL ÉQUIPÉE D'UN TEL DISPOSITIF DE POSITIONNEMENT

(30) Priorität: 22.01.2020 CH 652020
(43) Veröffentlichungstag der Anmeldung: 30.11.2022
(73) Patentinhaber: Reishauer AG, 8304 Wallisellen (CH)
(72) Erfinder: EGER, André, 4323 Wallbach (CH); JAKOB, Ronald, 8605 Gutenswil (CH)
(74) Vertreter: Detken, Andreas
(86) Internationale Anmeldenummer: PCT/EP2020/070542
(87) Internationale Veröffentlichungsnummer: WO 2021/148147

(56) Entgegenhaltungen:
- EP-A1- 1 146 983
- EP-A1- 2 898 965
- EP-A1- 3 518 058
- EP-A2- 2 759 364
- EP-A2- 2 803 436
- WO-A1-2017/194251
- WO-A1-2021/018562
- DE-U1- 202017 105 125

## Beschreibung

### TECHNISCHES GEBIET

Die vorliegende Erfindung betrifft ein Verfahren zum Bearbeiten eines Werkstücks, das eine erste und zweite Verzahnung aufweist, eine zur Verwendung in einem solchen Verfahren ausgebildete Positioniervorrichtung, sowie eine zur Ausführung dieses Verfahrens geeignete Werkzeugmaschine. Ein Verfahren gemäss dem Oberbegriff des Anspruchs 1 und eine Werkzeugmaschine gemäss dem Oberbegriff des Anspruchs 13 sind aus dem Dokument EP 2 759 364 A2 bekannt. Eine Positioniervorrichtung gemäss dem Oberbegriff des Anspruchs 8 ist aus dem Dokument DE 20 2017 105 125 U1 bekannt.

### STAND DER TECHNIK

Im Getriebebau werden gelegentlich Werkstücke eingesetzt, die zwei oder mehr Verzahnungen auf einer gemeinsamen Welle aufweisen. Solche Werkstücke werden im Folgenden auch als Doppelverzahnungen bezeichnet. Sie kommen z.B. häufig bei Elektroantrieben zum Einsatz.

Die Werkstücke werden häufig zunächst mit einem Weichbearbeitungsverfahren vorbearbeitet und anschliessend gehärtet. Danach erfolgt eine Hartfeinbearbeitung. Bei der Hartfeinbearbeitung stellt sich häufig die Aufgabe, eine der beiden Verzahnungen so zu bearbeiten, dass diese Verzahnung hinsichtlich ihrer Drehwinkellage exakt auf eine vorbestimmte Weise zur anderen Verzahnung (im Folgenden als Referenzverzahnung bezeichnet) ausgerichtet ist. Beispielsweise wird häufig vorgegeben, dass eine Zahnstruktur, z.B. ein Zahn oder eine Zahnlücke, der zu bearbeitenden Verzahnung exakt mit einer vorgegebenen Referenzzahnstruktur der Referenzverzahnung fluchten soll.

Es ist bekannt, die Drehwinkellagen von Zahnstrukturen (z.B. Zahnköpfen oder Zahnlücken) einer Verzahnung mit einem berührungslos arbeitenden Einzentriersensor zu ermitteln. Der Einzentriersensor kann z.B. als induktiver oder kapazitiver Sensor ausgebildet sein. Er ermittelt berührungslos die Position der Zahnstrukturen, während sich das Werkstück an ihm vorbeidreht.

Allerdings können übliche Einzentriersensoren die Drehwinkellagen von Zahnstrukturen häufig nicht genügend präzise bestimmen, um die Fluchtung von zwei Lücken der beiden Verzahnungen mit der gewünschten Präzision sicherzustellen. Dies gilt insbesondere dann, wenn die Verzahnungen am Übergang zwischen Zahnflanke und Zahnkopf mit einem Kantenbruch versehen sind, d.h. mit einer Fase oder Abrundung. Der Kantenbruch erschwert eine Erkennung der Lage der Zahnstrukturen durch den Einzentriersensor. Zudem ist nicht immer sichergestellt, dass der Kantenbruch für alle Zähne identisch ist.

DE 20 2017 105 125 U1 offenbart ein Verzahnungsmessgerät mit zwei Messvorrichtungen. Eine der beiden Messvorrichtungen ist ein Tastsystem, die andere eine berührungslos arbeitende Sensorvorrichtung. Die erste Messvorrichtung ist entlang einer Messachse bewegbar. Die zweite Messvorrichtung ist in einer "Huckepack"-Anordnung relativ zur ersten Messvorrichtung zwischen zwei Positionen verlagerbar. Das Dokument befasst sich nicht mit der Problematik von Doppelverzahnungen.

EP 3 518 058 A1 offenbart ein Verfahren zur automatischen Positionierung eines verzahnten Werkstücks, das eine maschinenlesbare, werkstückspezifische Markierung aufweist. Die Markierung wird erfasst, und auf dieser Basis wird eine Ist-Position des Werkstücks ermittelt. Das Werkstück wird anschliessend in eine Soll-Position überführt. Das Dokument befasst sich nicht mit der Problematik von Doppelverzahnungen.

### DARSTELLUNG DER ERFINDUNG

Es ist eine Aufgabe, ein Verfahren zum Bearbeiten eines Werkstücks mit mindestens zwei Verzahnungen anzugeben, das es ermöglicht, eine der beiden Verzahnungen so zu bearbeiten, dass diese Verzahnung hinsichtlich ihrer Drehwinkellage präzise auf eine vorbestimmte Weise zur anderen Verzahnung ausgerichtet ist. Das Verfahren soll auch dann eine präzise Ausrichtung ermöglichen, wenn die Verzahnungen mit einem Kantenbruch versehen sind.

Diese Aufgabe wird durch ein Verfahren nach Anspruch 1 gelöst. Weitere Ausführungsformen sind in den abhängigen Ansprüchen angegeben.

Es wird ein Verfahren zum Bearbeiten eines Werkstücks angegeben, das eine erste und zweite Verzahnung aufweist. Das Werkstück ist um eine Werkstückachse drehbar aufgespannt. Das Verfahren umfasst:
Identifizieren mindestens einer Referenzzahnstruktur der ersten Verzahnung mit einer Referenzidentifikationseinrichtung;
Vermessen der Referenzzahnstruktur mit einer Referenzvermessungseinrichtung, um eine Referenzdrehwinkellage des Werkstücks zu ermitteln; und
Bearbeiten der zweiten Verzahnung mit einem Bearbeitungswerkzeug derart, dass die zweite Verzahnung eine Drehwinkellage erhält, die in einer vorbestimmten Beziehung zur ermittelten Referenzdrehwinkellage steht.

Zunächst wird also mindestens eine Referenzzahnstruktur (z.B. ein Referenzzahn oder eine Referenzzahnlücke) der ersten Verzahnung (Referenzverzahnung) eindeutig identifiziert. Anschliessend erfolgt eine präzise Vermessung der Referenzzahnstruktur. Dadurch kann schnell und mit hoher Präzision eine Referenzdrehwinkellage des Werkstücks ermittelt werden. Optional können mehrere Referenzzahnstrukturen der Referenzverzahnung vermessen werden, um die Referenzdrehwinkellage besonders präzise zu bestimmen. Die Bearbeitung der zweiten Verzahnung kann nun auf der Basis der so ermittelten Referenzdrehwinkellage der Referenzverzahnung erfolgen. Dadurch kann sichergestellt werden, dass die zweite Verzahnung durch die Bearbeitung eine Drehwinkellage erhält, die mit hoher Präzision in der gewünschten Beziehung zur ermittelten Referenzdrehwinkellage steht. Beispielsweise kann sichergestellt werden, dass nach der Bearbeitung mindestens eine Zahnstruktur der zweiten Verzahnung exakt mit mindestens einer vorbestimmten Referenzzahnstruktur der ersten Verzahnung fluchtet oder eine bestimmte Drehwinkeldifferenz zu dieser Referenzzahnstruktur aufweist. Anders als üblich bestimmt also nicht die Lage der Zahnstrukturen der zweiten Verzahnung, wie diese Verzahnung bearbeitet wird, sondern die Lage der Zahnstrukturen der ersten Verzahnung ist dafür massgeblich.

Die Bearbeitung der zweiten Verzahnung kann z.B. durch ein Wälzbearbeitungsverfahren erfolgen, insbesondere durch ein Wälzschleifverfahren, Wälzschälverfahren oder Wälzhonverfahren. In diesem Fall wird der Wälzkopplungswinkel für das Wälzbearbeitungsverfahren vorzugsweise unter Verwendung der zuvor ermittelten Referenzdrehwinkellage des Werkstücks festgelegt. Es wird also nicht, wie sonst üblich, eine Drehwinkellage zu bearbeitenden Verzahnung bestimmt, um den Wälzkopplungswinkel festzulegen, sondern die Festlegung des Wälzkopplungswinkels erfolgt anhand der Lage der zuvor vermessenen Referenzzahnstruktur der Referenzverzahnung. Es sind aber auch andere Bearbeitungsverfahren als Wälzbearbeitungsverfahren denkbar, z.B. Teilungsverfahren wie das Profilschleifen.

In vorteilhaften Ausgestaltungen weist das Werkstück mindestens eine Markierung auf, und die Referenzidentifikationseinrichtung umfasst eine berührungslos arbeitende Markierungserfassungseinrichtung. Das Identifizieren der mindestens einen Referenzzahnstruktur der ersten Verzahnung kann dann umfassen:
Erfassen der mindestens einen Markierung des Werkstücks mit der Markierungserfassungseinrichtung; und
Identifizieren der mindestens einen Referenzzahnstruktur der ersten Verzahnung anhand der erfassten Markierung.

Bei der Markierung kann es sich um eine beliebige Art von Markierung handeln, die berührungslos detektiert werden kann. Beispielsweise kann die Markierung durch eine stirnseitige Bohrung durch einen Bereich des Werkstücks gebildet sein, wobei die Bohrung sacklochartig oder durchgehend sein kann. Die Bohrung kann offen sein oder mit einem Füllmaterial gefüllt sein. Die Markierung kann aber auch durch eine Gravur, eine Fase, einen Vorsprung oder einen Aufdruck usw. gebildet sein. Es sind vielfältige weitere Arten von Markierungen denkbar. Abhängig von der Art der Markierung kann die Markierungserfassungseinrichtung beispielsweise einen induktiven, kapazitiven oder optischen Sensor umfassen.

Die Markierung kann an einer beliebigen Stelle am Werkstück angebracht sein. Sie kann beispielsweise im einfachsten Fall an einer Stirnseite des Werkstücks radial innerhalb der ersten Verzahnung am Werkstück angebracht und direkt auf die Referenzzahnstruktur ausgerichtet sein. Die Markierung kann aber auch auf eine andere Zahnstruktur der ersten Verzahnung als die Referenzzahnstruktur ausgerichtet sein. Die Markierung kann sogar an einer Stelle des Werkstücks angebracht sein, die von der Referenzzahnstruktur verhältnismässig weit entfernt ist, z.B. an der Welle oder im Bereich der zweiten Verzahnung. Es genügt, dass bekannt ist, wie von der Lage der Markierung eindeutig auf die Lage der Referenzzahnstruktur geschlossen werde kann. Eine hohe Präzision bei der Lageermittlung ist nicht erforderlich, da die Referenzzahnstruktur anhand der Markierung nur identifiziert zu werden braucht, während ihre genaue Lage anschliessend in einer separaten Messung ermittelt wird.

In vorteilhaften Ausführungsformen weist die Markierungserfassungseinrichtung einen ersten und zweiten Markierungssensor auf, wobei die ersten und zweiten Markierungssensoren bezüglich einer Umfangsrichtung des Werkstücks z.B. hintereinander oder nebeneinander angeordnet sein können. Das Erfassen der Markierung des Werkstücks umfasst dann vorteilhaft eine Differenzbildung von Signalen des ersten und zweiten Markierungssensors, um auf diese Weise die Markierung mit grösserer Sicherheit erkennen zu können.

Alternativ oder zusätzlich zu einem Markierungssensor kann die Referenzidentifikationseinrichtung einen berührungslos arbeitenden ersten Einzentriersensor und einen berührungslos arbeitenden zweiten Einzentriersensor umfassen. Das Identifizieren der mindestens einer Referenzzahnstruktur der ersten Verzahnung kann dann mit einem sogenannten "Best Fit"-Verfahren erfolgen. Dieses kann die folgenden Schritte umfassen:
Ermitteln von Drehwinkellagen von Zahnstrukturen der ersten Verzahnung mit dem ersten Einzentriersensor;
Ermitteln von Drehwinkellagen von Zahnstrukturen der zweiten Verzahnung mit dem zweiten Einzentriersensor;
Bestimmen von Drehwinkelabständen von Zahnstrukturen der ersten Verzahnung zu Zahnstrukturen der zweiten Verzahnung aus den ermittelten Drehwinkellagen, und
Identifizieren der mindestens einen Referenzzahnstruktur der ersten Verzahnung anhand eines Vergleichs der Drehwinkelabstände mit einem vorgegebenen Abstandssollwert.

Als Referenzvermessungseinrichtung für die Vermessung der Referenzzahnstruktur wird ein taktiler oder optischer Sensor eingesetzt. Derartige Sensoren ermöglichen eine Vermessung der Referenzzahnstruktur mit besonders hoher Präzision. Wenn die Referenzvermessungseinrichtung einen taktilen Sensor umfasst, weist dieser eine Sensorbasis und eine Tastspitze auf. In einigen Ausführungsformen kann die Tastspitze gegenüber einer Sensorbasis ausgefahren werden, um entlang einer vorzugsweise radialen Einführrichtung mit der ersten Verzahnung in Eingriff gebracht zu werden, ohne dass dazu der gesamte taktile Sensor bewegt zu werden braucht. Das ist insbesondere dann von Vorteil, wenn der taktile Sensor auf einem gemeinsamen Sensorträger mit anderen Sensoren, insbesondere mit der Referenzidentifikationseinrichtung, angeordnet ist. In anderen Ausführungsformen ist der gesamte taktile Sensor gegenüber dem Sensorträger verschiebbar oder verschwenkbar, um ihn in Eingriff mit der ersten Verzahnung zu bringen.

Die Vermessung mit einem taktilen Sensor kann insbesondere dadurch erfolgen, dass die Drehwinkellage des Werkstücks um einen kleinen Betrag hin und her verändert wird, während sich die Tastspitze im Bereich einer Zahnflanke der Referenzzahnstruktur befindet. Es werden dann die Drehwinkellagen des Werkstücks ermittelt, in denen eine Berührung der linken bzw. rechten Flanke der Referenzzahnstruktur mit der Tastspitze erfolgt, und daraus wird z.B. ein Mittelwert gebildet. Dies kann optional an mehreren Stellen in Flankenrichtung und/oder in Profilrichtung erfolgen. Zur Vermessung der Referenzzahnstruktur können aber auch andere taktile oder optische Verfahren eingesetzt werden, wie sie grundsätzlich aus dem Bereich der Verzahnungsprüfung bekannt sind.

Zusätzlich kann vorgesehen sein, die erste Verzahnung mit einem berührungslos arbeitenden ersten Einzentriersensor und/oder die zweite Verzahnung mit einem berührungslos arbeitenden zweiten Einzentriersensor zu prüfen, während das Werkstück um die Werkstückachse rotiert. Das ist insbesondere dann sinnvoll, wenn die Identifikation der Referenzzahnstruktur anhand einer Markierung erfolgt. Insbesondere kann dadurch eine Konsistenzprüfung durchgeführt werden.

So kann mit dem ersten Einzentriersensor die erste Verzahnung geprüft werden, bevor die Vermessung der Referenzzahnstruktur mit der Referenzvermessungseinrichtung erfolgt, um z.B. Fehler bei der Identifikation der Referenzzahnstruktur oder Vorbearbeitungsfehler der ersten Verzahnung zu erkennen. Die Prüfung der ersten Verzahnung mit dem Einzentriersensor kann insbesondere dazu dienen, zu prüfen, ob sich an der Position, die mit der Referenzidentifikationseinrichtung ermittelt wurde, überhaupt die erwartete Art von Zahnstruktur (z.B. eine Zahnlücke) befindet. Wenn sich an der ermittelten Position nicht die erwartete Art von Zahnstruktur befindet, liegt ein Fehler vor, und das Verfahren kann gestoppt werden. Der erste Einzentriersensor kann auch dazu eingesetzt werden, die Drehwinkellage der Referenzzahnstruktur genauer festzustellen, als dies nur anhand der Markierung möglich ist. Die Vermessung der Referenzzahnstruktur durch die Referenzvermessungseinrichtung kann dann ganz gezielt und entsprechend mit hoher Geschwindigkeit erfolgen.

Mit dem zweiten Einzentriersensor kann die zweite Verzahnung geprüft werden, um Vorbearbeitungsfehler der zweiten Verzahnung zu erkennen. Insbesondere können auf diese Weise Werkstücke erkannt werden, an denen die vorgesehene Bearbeitung gar nicht durchgeführt werden kann bzw. nicht zum gewünschten Ergebnis führen kann, weil die Vorbearbeitungsfehler zu gross sind. Insbesondere kann verhindert werden, dass es im Extremfall beim Einfädeln des Bearbeitungswerkzeugs in der Drehwinkellage, die anhand des ermittelten Referenzdrehwinkels festgelegt wurde, zu einer Beschädigung des Bearbeitungswerkzeugs kommt, weil die Vorbearbeitungsfehler zu gross sind.

In vorteilhaften Ausgestaltungen ist die Referenzvermessungseinrichtung an einem Sensorträger angebracht. Am Sensorträger können weitere Sensoreinrichtungen angebracht sein, insbesondere mindestens ein Teil der Referenzidentifikationseinrichtung wie der Markierungssensor und/oder ein oder mehrere Einzentriersensoren. Auf diese Weise resultiert eine kompakte Einheit, die als Ganzes relativ zum Werkstück bewegt werden kann.

Der Sensorträger kann zwischen einer Messstellung und einer Parkstellung bewegbar sein, um z.B. ein kollisionsfreies Be- und Entladen des Werkstücks zu ermöglichen oder um die genannten Sensoreinrichtungen während der Werkstückbearbeitung vor schädlichen Einflüssen durch Späne und Kühlschmiermittel zu schützen. Diese Bewegung des Sensorträgers kann insbesondere durch Verschwenken um eine Schwenkachse, die beispielsweise senkrecht oder parallel zur Werkstückachse verlaufen kann, oder durch Verschieben entlang einer Verschieberichtung, die beispielsweise radial oder parallel zur Werkstückachse verlaufen kann, erfolgen.

Um eine grösstmögliche Genauigkeit bei der Ermittlung der Referenzwinkellage selbst dann sicherzustellen, wenn sich die beteiligten Bauteile aufgrund von thermischen Einflüssen ausdehnen oder verziehen, kann das Verfahren umfassen, dass in der Messstellung die Lage des Sensorträgers bezüglich mindestens einer Raumrichtung ermittelt wird. Insbesondere kann in der Messstellung die Lage des Sensorträgers relativ zum Werkstück bezüglich einer oder mehrerer der folgenden Raumrichtungen ermittelt werden: einer Tangentialrichtung, die tangential zum Werkstück verläuft; einer Axialrichtung, die parallel zur Werkstückachse verläuft; und einer Radialrichtung, die radial zur Werkstückachse verläuft. Dazu kann eine entsprechende Lagereferenzvorrichtung vorgesehen sein. Eine mögliche Lagereferenzvorrichtung wird nachstehend noch näher beschrieben. Die ermittelte Referenzwinkellage kann dann anhand der ermittelten Lage des Sensorträgers im Raum korrigiert werden.

Die Drehwinkellagen des Werkstücks können sich zwischen der Identifikation der Referenzzahnstruktur und deren Vermessung unterscheiden, da die Referenzidentifikationseinrichtung und die Referenzvermessungseinrichtung nicht notwendigerweise miteinander fluchten. Die entsprechende Drehwinkeldifferenz kann mit Hilfe eines Meisterwerkstücks kalibriert werden, d.h., mit einem Werkstück, das exakt der vorgesehenen Werkstückauslegung entspricht. Auch die relativen Drehwinkellagen des Werkstücks während der Vermessung der Referenzzahnstruktur und der Bearbeitung des Werkstücks sowie die dazu relative Drehwinkellage des Werkzeugs können auf diese Weise kalibriert werden. Ebenfalls kann eine Kalibrierung der Winkellagen weiterer Sensoren mit dem Meisterwerkstück erfolgen.

Die Positionierung der verschiedenen Sensoreinrichtungen am Sensorträger (Referenzidentifikationseinrichtung, Referenzvermessungseinrichtung usw.) kann mithilfe einer Lehre erfolgen. Diese kann z.B. geometrisch einem Werkstückrohling entsprechen, dessen Geometrie wie das zu bearbeitende Werkstück gewählt ist, der aber keine vorbearbeiteten Verzahnungen aufweist, und bei dem in Richtung der Sensoreinrichtungen ein gewisses Aufmass von z.B. 0.1 mm vorhanden ist. Die Sensoreinrichtungen können dann positioniert werden, indem sie in Anschlag mit dieser Lehre gebracht werden.

Das vorgeschlagene Verfahren eignet sich gleichermassen für Aussenverzahnungen und Innenverzahnungen. Insbesondere sind folgende Kombinationen möglich:
Sowohl die erste Verzahnung als auch die zweite Verzahnung sind Aussenverzahnungen; in diesem Fall weist die Referenzvermessungseinrichtung in der Messstellung nach innen, d.h. in Richtung der Werkstückachse, und wenn Einzentriersensoren vorhanden sind, weisen diese in der Messstellung ebenfalls nach innen.
Sowohl die erste Verzahnung als auch die zweite Verzahnung sind Innenverzahnungen; in diesem Fall weist die Referenzvermessungseinrichtung in der Messstellung nach aussen, d.h. von der Werkstückachse weg, und wenn Einzentriersensoren vorhanden sind, weisen diese in der Messstellung ebenfalls nach aussen.
Die erste Verzahnung ist eine Innenverzahnung und die zweite Verzahnung ist eine Aussenverzahnung; in diesem Fall weist die Referenzvermessungseinrichtung in der Messstellung nach aussen, und wenn Einzentriersensoren vorhanden sind, weist in der Messstellung der erste Einzentriersensor nach aussen und der zweite Einzentriersensor nach innen. die erste Verzahnung ist eine Aussenverzahnung und die zweite Verzahnung ist eine Innenverzahnung; in diesem Fall weist die Referenzvermessungseinrichtung in der Messstellung nach innen, und wenn Einzentriersensoren vorhanden sind, weist in der Messstellung der erste Einzentriersensor nach innen und der zweite Einzentriersensor nach aussen.

In einem zweiten Aspekt stellt die vorliegende Erfindung eine Positioniervorrichtung zum Ermitteln einer Referenzdrehwinkellage eines Werkstücks gemäss Anspruch 8 zur Verfügung. Wiederum weist das Werkstück eine erste und zweite Verzahnung auf. Die Positioniervorrichtung weist auf:
- eine Referenzidentifikationseinrichtung, die dazu ausgebildet ist, berührungslos mindestens eine Referenzzahnstruktur der ersten Verzahnung zu identifizieren; und
- eine Referenzvermessungseinrichtung, die dazu ausgebildet ist, die mit der Referenzidentifikationseinrichtung identifizierte Referenzzahnstruktur der ersten Verzahnung zu vermessen, um die Referenzdrehwinkellage des Werkstücks zu ermitteln.
Die Positioniervorrichtung nach Anspruch 8 hat zudem mindestens eine der folgenden Eigenschaften a) oder b):
a) Die Referenzvermessungseinrichtung umfasst einen optischen Sensor, oder
b) Die Referenzvermessungseinrichtung umfasst einen taktilen Sensor, der eine Sensorbasis und eine Tastspitze aufweist, und die Referenzidentifikationseinrichtung umfasst einen berührungslos arbeitenden ersten Einzentriersensor zum Ermitteln von Drehwinkellagen von Zahnstrukturen der ersten Verzahnung und einen berührungslos arbeitenden zweiten Einzentriersensor zum Ermitteln von Drehwinkellagen von Zahnstrukturen der zweiten Verzahnung.

Die Positioniervorrichtung kann insbesondere dazu ausgebildet sein, in den vorstehend beschriebenen Verfahren verwendet zu werden.

Wie schon ausgeführt wurde, kann die Referenzidentifikationseinrichtung eine Markierungserfassungseinrichtung umfassen, die dazu ausgebildet ist, eine Markierung des Werkstücks berührungslos zu erfassen. Die Markierungserfassungseinrichtung kann einen ersten und zweiten Markierungssensor aufweisen, wobei die ersten und zweiten Markierungssensoren bezüglich einer Umfangsrichtung des Werkstücks hintereinander oder nebeneinander angeordnet sind.

Wie schon ausgeführt wurde, kann die Referenzidentifikationseinrichtung aufweisen:
- einen berührungslos arbeitenden ersten Einzentriersensor zum Ermitteln von Drehwinkellagen von Zahnstrukturen der ersten Verzahnung; und
- einen berührungslos arbeitenden zweiten Einzentriersensor zum Ermitteln von Drehwinkellagen von Zahnstrukturen der zweiten Verzahnung.

Wie vorstehend schon ausgeführt wurde, kann die Referenzvermessungseinrichtung einen taktilen oder optischen Sensor umfassen. Der taktile Sensor kann eine Tastspitze aufweisen, die gegenüber einer Sensorbasis ausfahrbar ist, um entlang einer vorzugsweise radialen Einführrichtung in Eingriff mit der ersten Verzahnung gebracht zu werden. Alternativ oder zusätzlich kann der taktile Sensor gegenüber einem Sensorträger verschiebbar oder verschwenkbar sein, um ihn in Eingriff mit der ersten Verzahnung zu bringen.

Wenn die Positioniervorrichtung einen ersten und/oder zweiten Einzentriersensor umfasst, ist es von Vorteil, wenn der erste und/oder zweite Einzentriersensor entlang einer Umfangsrichtung des Werkstücks versetzt zur Referenzvermessungseinrichtung angeordnet ist. Dadurch kann vermieden werden, dass die Positioniervorrichtung zwischen dem Einsatz der Einzentriersensoren und dem Einsatz der Referenzvermessungseinrichtung bewegt werden muss. Insbesondere ist es von Vorteil, wenn der erste und/oder zweite Einzentriersensor eine radiale Messrichtung definiert, die in einem Winkel zur Einführrichtung der Tastspitze verläuft, wobei vorzugsweise sowohl die radiale Einführrichtung der Tastspitze als auch die radiale Messrichtung parallel zu einer Normalenebene zur Werkstückachse verlaufen.

Die Markierungserfassungseinrichtung, falls vorhanden, kann eine Erfassungsrichtung definieren, die sich von der Einführrichtung der Tastspitze unterscheidet, z.B. senkrecht zu dieser verläuft. Es sind aber auch andere Ausgestaltungen möglich, wobei die genaue Ausgestaltung stark davon abhängt, an welcher Stelle die Markierung am Werkstück angebracht ist.

Wie schon ausgeführt wurde, kann die Positioniervorrichtung einen Sensorträger aufweisen, an dem die Referenzvermessungseinrichtung angebracht ist. Vorzugsweise ist auch mindestens ein Teil der die Referenzidentifikationseinrichtung am Sensorträger angebracht. Der Sensorträger kann beweglich mit einem Basiselement verbunden sein, um den Sensorträger zwischen einer Parkstellung und einer Messstellung zu bewegen, insbesondere durch Verschwenken um eine beispielsweise senkrecht oder parallel zur Werkstückachse verlaufende Schwenkachse oder durch Verschieben entlang einer beispielsweise radial oder parallel zur Werkstückachse verlaufenden Verschieberichtung.

Die Positioniervorrichtung kann Teil einer Werkzeugmaschine zur Bearbeitung der zweiten Verzahnung sein. Diese kann einen Werkstückträger sowie mindestens eine darauf angeordnete Werkstückspindel aufweisen, wobei die Werkstückspindel dazu ausgebildet ist, das Werkstück zu einer Drehung um die Werkstückachse aufzunehmen. Die Werkzeugmaschine kann des Weiteren ein Maschinenbett aufweisen. Der Werkstückträger kann Teil des Maschinenbetts sein bzw. starr mit diesem verbunden sein, oder er kann gegenüber dem Maschinenbett bewegbar, insbesondere um eine Werkstückträgerachse verschwenkbar, sein.

Wenn der Werkstückträger gegenüber dem Maschinenbett bewegbar ist und der Sensorträger beweglich mit einem Basiselement verbunden ist, kann es von Vorteil sein, wenn das Basiselement am Maschinenbett angeordnet ist, wenn also die Positioniervorrichtung nicht mit dem Werkstückträger mitbewegt wird.

Falls eine Lagereferenzvorrichtung vorhanden ist, kann diese mindestens ein Lagereferenztarget und mindestens einen Lagereferenzsensor aufweisen. In diesem Fall ist vorteilhaft entweder das mindestens eine Lagereferenztarget mit dem Werkstückträger und der mindestens eine Lagereferenzsensor mit dem Sensorträger verbunden, oder das mindestens eine Lagereferenztarget ist mit dem Sensorträger und der mindestens eine Lagereferenzsensor mit dem Werkstückträger verbunden.

Es ist auch denkbar, die Positioniervorrichtung, insbesondere den Sensorträger, am Werkstückträger anzuordnen, so dass sie sich mit dem Werkstückträger mitbewegt. Dies hat den Vorteil, dass die Identifikation und Vermessung der Referenzzahnstruktur nicht nur im Stillstand des Werkstückträgers erfolgen kann, sondern auch während sich der Werkstückträger bewegt. Dadurch können unproduktive Nebenzeiten minimiert werden. Falls der Werkstückträger gegenüber dem Maschinenbett um eine Werkstückträgerachse verschwenkbar ist, kann es von Vorteil sein, wenn der Sensorträger in einem radial zwischen der Werkstückträgerachse und der Werkstückachse gelegenen Bereich am Werkstückträger angeordnet wird.

Die Werkzeugmaschine kann des Weiteren eine Werkzeugspindel aufweisen, die dazu ausgebildet ist, ein Bearbeitungswerkzeug zu einer Drehung um eine Werkzeugachse aufzunehmen. Sie kann zudem eine Steuereinrichtung aufweisen, die dazu ausgebildet ist, die vorstehend geschilderten Verfahren auszuführen. So kann die Steuerung insbesondere dazu ausgebildet sein, den Sensorträger zwischen der Parkstellung und der Messstellung zu bewegen, insbesondere zu verschwenken oder zu verschieben. Sie kann auch dazu ausgebildet sein, in der Messstellung mittels der Lagereferenzvorrichtung die Lage des Sensorträgers relativ zum Werkstück bezüglich mindestens einer Raumrichtung, insbesondere der oben erwähnten Tangentialrichtung, Axialrichtung und/oder Radialrichtung, zu ermitteln. Auch kann die Steuerung dazu ausgebildet sein, die Tastspitze des taktilen Sensors relativ zum Sensorträger entlang der Einführrichtung zu verschieben, um die Tastspitze in die erste Verzahnung einzuführen. Ausserdem kann die Steuerung dazu ausgebildet sein, die erste Verzahnung mit dem ersten berührungslos arbeitenden Einzentriersensor zu vermessen, bevor der taktile Sensor mit der ersten Verzahnung in Eingriff gebracht wird, und/oder die zweite Verzahnung mit dem zweiten berührungslos arbeitenden Einzentriersensor zu vermessen, um Vorbearbeitungsfehler der zweiten Verzahnung zu ermitteln.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische perspektivische Ansicht einer Feinbearbeitungsmaschine mit einer Positioniervorrichtung gemäss einer ersten Ausführungsform in einer Messstellung;
- Fig. 2: eine perspektivische Ansicht der Positioniervorrichtung gemäss der ersten Ausführungsform in einer Parkstellung;
- Fig. 3: eine perspektivische Ansicht der Positioniervorrichtung gemäss der ersten Ausführungsform in der Messstellung;
- Fig. 4: eine vergrösserte Ansicht des Details IV in Fig. 3;
- Fig. 5: eine Draufsicht auf die Positioniervorrichtung gemäss der ersten Ausführungsform in der Messstellung, mit zurückgezogener Tastspitze;
- Fig. 6: eine Draufsicht auf die Positioniervorrichtung gemäss der ersten Ausführungsform in der Messstellung, mit ausgefahrener Tastspitze;
- Fig. 7: einen beispielhaften Ablaufplan für die Bearbeitung eines Werkstücks;
- Fig. 8: eine Draufsicht auf eine Positioniervorrichtung gemäss einer zweiten Ausführungsform in einer Messstellung, wobei in gestrichelten Linien eine Parkstellung angedeutet ist;
- Fig. 9: eine Seitenansicht einer Positioniervorrichtung gemäss einer dritten Ausführungsform in einer Messstellung;
- Fig. 10: eine Seitenansicht einer Positioniervorrichtung gemäss einer vierten Ausführungsform in einer Messstellung;
- Fig. 11: eine Draufsicht auf die Positioniervorrichtung der vierten Ausführungsform in der Messstellung;
- Fig. 12: eine Draufsicht auf die Positioniervorrichtung der vierten Ausführungsform in einer Parkstellung;
- Fig. 13: eine schematische perspektivische Ansicht einer Feinbearbeitungsmaschine mit einer Positioniervorrichtung gemäss einer fünften Ausführungsform;
- Fig. 14: eine vergrösserte Ansicht der Positioniervorrichtung der fünften Ausführungsform mit zurückgezogener Tastspitze;
- Fig. 15: die Ansicht der fünften Ausführungsform mit ausgefahrener Tastspitze;
- Fig. 16: eine perspektivische Ansicht einer Positioniervorrichtung gemäss einer sechsten Ausführungsform;
- Fig. 17: eine vergrösserte Ansicht des Details XVII in Fig. 16;
- Fig. 18: eine perspektivische Ansicht einer Positioniervorrichtung gemäss einer siebenten Ausführungsform;
- Fig. 19: eine vergrösserte Ansicht des Details XIX in Fig. 18;
- Fig. 20: ein Diagramm, das beispielhaft den zeitlichen Verlauf von Sensorsignalen der Markierungserfassungseinrichtung der Positioniervorrichtung gemäss der sechsten Ausführungsform illustriert;
- Fig. 21: ein Diagramm, das beispielhaft den zeitlichen Verlauf der Differenz der Sensorsignale aus Fig. 20 illustriert;
- Fig. 22: eine schematische Ansicht einer Doppelverzahnung zur Illustration eines "Best Fit"-Verfahrens;
- Fig. 23: eine schematische perspektivische Ansicht einer Positioniervorrichtung gemäss einer achten Ausführungsform in einer Parkstellung;
- Fig. 24: eine vergrösserte Ansicht des Details A in Fig. 23;
- Fig. 25: eine schematische Seitenansicht der Positioniervorrichtung der Fig. 23 in einer Messstellung;
- Fig. 26: eine schematische Draufsicht auf die Positioniervorrichtung der achten Ausführungsform in der Messstellung;
- Fig. 27: eine schematische perspektivische Ansicht der Positioniervorrichtung gemäss der achten Ausführungsform in der Parkstellung, mit zusätzlicher Lagereferenzvorrichtung;
- Fig. 28: eine schematische perspektivische Ansicht einer Positioniervorrichtung gemäss einer neunten Ausführungsform in einer Parkstellung;
- Fig. 29: eine schematische perspektivische Ansicht der Positioniervorrichtung gemäss der neunten Ausführungsform in einer Messstellung;
- Fig. 30: eine schematische Seitenansicht der Positioniervorrichtung gemäss der neunten Ausführungsform in der Messstellung, mit einem Ausbruch zur Darstellung der Referenzvermessungsvorrichtung in einer ausgeschwenkten Stellung;
- Fig. 31: eine schematische Seitenansicht der Positioniervorrichtung gemäss der neunten Ausführungsform in der Messstellung, mit einem Ausbruch zur Darstellung der Referenzvermessungsvorrichtung in einer eingeschwenkten Stellung;
- Fig. 32: eine schematische perspektivische Ansicht einer Positioniervorrichtung gemäss einer zehnten Ausführungsform in einer Parkstellung;
- Fig. 33: eine schematische perspektivische Ansicht der Positioniervorrichtung gemäss der zehnten Ausführungsform in einer Messstellung;
- Fig. 34: eine schematische perspektivische Ansicht einer Wälzschälmaschine mit einer Positioniervorrichtung gemäss einer elften Ausführungsform in einer Messstellung;
- Fig. 35: eine vergrösserte Detailansicht im Bereich XXXV der Fig. 34; und
- Fig. 36: eine schematische perspektivische Ansicht einer Positioniervorrichtung gemäss einer zwölften Ausführungsform in einer Parkstellung.

### BESCHREIBUNG BEVORZUGTER AUSFÜHRUNGSFORMEN

### Aufbau einer beispielhaften Feinbearbeitungsmaschine

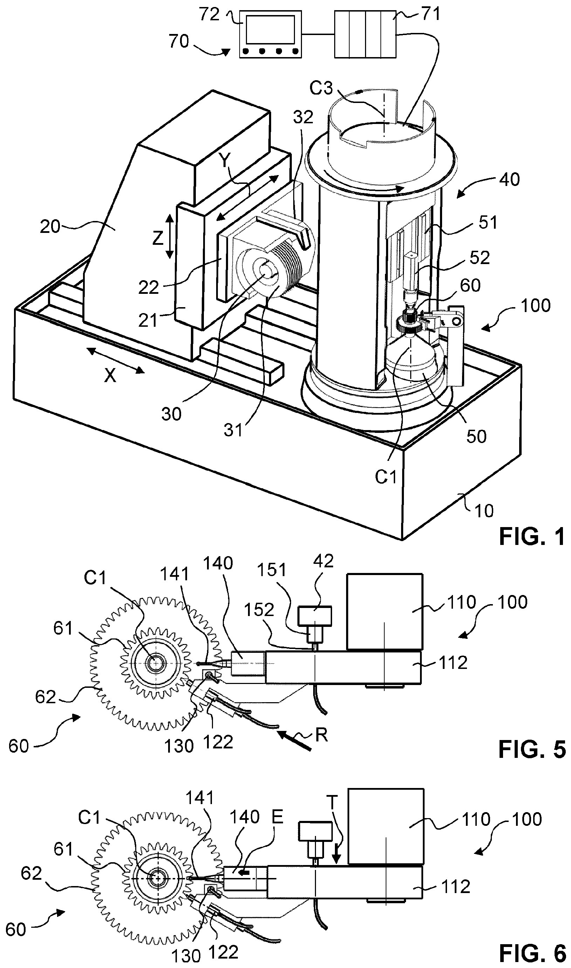

In der Fig. 1 ist eine Feinbearbeitungsmaschine zur Hartfeinbearbeitung von Zahnrädern durch Wälzschleifen dargestellt. Die Maschine weist ein Maschinenbett 10 auf, auf dem ein Werkzeugträger 20 entlang einer horizontalen Zustellrichtung X verschiebbar angeordnet ist. Ein Z-Schlitten 21 ist entlang einer vertikalen Richtung Z verschiebbar am Werkzeugträger 20 angeordnet. Auf dem Z-Schlitten 21 ist ein Y-Schlitten 22 angeordnet, der gegenüber dem Z-Schlitten 21 einerseits um eine in Fig. 1 nicht eingezeichnete horizontale Schwenkachse, die parallel zur X-Achse verläuft, verschwenkbar und andererseits entlang einer Shiftrichtung Y, die senkrecht zur X-Achse und in einem einstellbaren Winkel zur Z-Achse verläuft, verschiebbar ist. Der Y-Schlitten 22 trägt eine Werkzeugspindel 30, auf der ein Feinbearbeitungswerkzeug in Form einer Schleifschnecke 31 aufgespannt ist. Die Werkzeugspindel 30 umfasst einen Werkzeugspindelantrieb 32, um die Schleifschnecke 31 zu einer Drehung um eine Werkzeugspindelachse anzutreiben.

Auf dem Maschinenbett 10 ist ein schwenkbarer Werkstückträger in Form eines Drehturms 40 angeordnet. Der Drehturm 40 ist um eine vertikale Schwenkachse C3 zwischen mehreren Drehstellungen verschwenkbar. Er trägt zwei Werkstückspindeln 50, auf denen jeweils ein Werkstück 60 aufspannbar ist. Ein Gegenständer 51 trägt pro Werkstückspindel einen vertikal verfahrbaren Reitstock 52. Jede der Werkstückspindeln 50 ist zu einer Drehung um eine Werkstückachse antreibbar. In der Fig. 1 ist die Werkstückachse der sichtbaren Werkstückspindel 50 mit C1 bezeichnet. Die beiden Werkstückspindeln befinden sich auf dem Drehturm 40 in diametral gegenüberliegenden (d.h. bezüglich der Schwenkachse C3 um 180° versetzten) Positionen. Auf diese Weise kann eine der beiden Werkstückspindeln be- und entladen werden, während auf der anderen Werkstückspindel ein Werkstück durch die Schleifschnecke 31 bearbeitet wird. Dadurch werden unerwünschte Nebenzeiten weitgehend vermieden. Ein derartiges Maschinenkonzept ist z.B. aus WO 00/035621 A1 bekannt.

Das Werkstück 60 weist zwei Aussenverzahnungen auf. Eine nachstehend noch näher beschriebene Positioniervorrichtung 100 dient dazu, das Werkstück 60 derart hinsichtlich seiner Drehwinkellage um die Werkstückachse C1 auszurichten, dass die grössere der beiden Verzahnungen kollisionsfrei mit der Schleifschnecke 31 in Eingriff gebracht werden kann und diese Verzahnung anschliessend derart bearbeitet werden kann, dass sie nach der Bearbeitung mit hoher Präzision eine vorher festgelegte Drehwinkellage zur anderen Verzahnung einnimmt.

Die Maschine weist eine nur symbolisch dargestellte Maschinensteuerung 70 auf, welche mehrere Steuerungsmodule 71 sowie eine Bedientafel 72 umfasst. Jedes der Steuerungsmodule 71 steuert eine Maschinenachse an und/oder empfängt Signale von Sensoren. Im vorliegenden Beispiel ist mindestens eines der Steuerungsmodule 71 dazu vorgesehen, mit den nachstehend noch näher beschriebenen Sensoren der Positioniervorrichtung 100 zusammenzuwirken.

### Werkstück mit zwei Aussenverzahnungen: Positioniervorrichtung mit horizontaler Schwenkachse

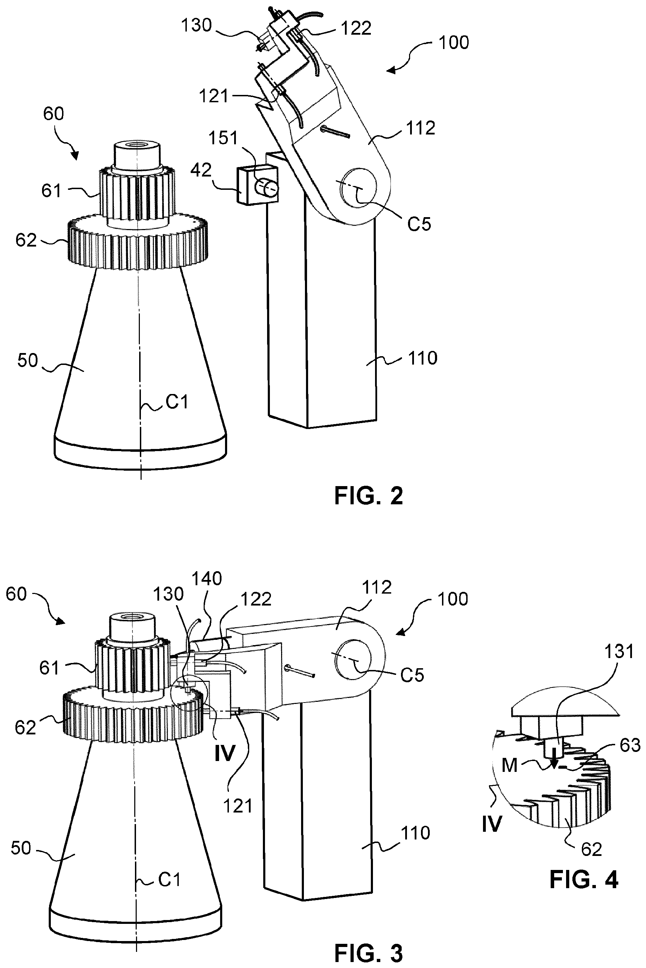

In den Figuren 2 bis 6 ist eine Positioniervorrichtung 100 gemäss einer ersten Ausführungsform gemeinsam mit dem auf der Werkstückspindel 50 aufgespannten Werkstück 60 dargestellt.

Wie insbesondere aus den Figuren 2 und 3 hervorgeht, weist das hier beispielhaft dargestellte Werkstück 60 eine Welle auf, auf der an axial unterschiedlichen Positionen zwei unterschiedlich grosse Stirnräder ausgebildet sind. Die Stirnräder sind einstückig mit der Welle ausgebildet. Das kleinere der beiden Stirnräder weist eine erste Verzahnung 61 auf. Diese Verzahnung wird im Folgenden auch als Referenzverzahnung bezeichnet. Das grössere der beiden Stirnräder weist eine zweite Verzahnung 62 auf. Diese Verzahnung soll mit der Feinbearbeitungsmaschine bearbeitet werden. Die Verzahnungen 61, 62 unterscheiden sich im vorliegenden Beispiel nicht nur in ihrem Kopfkreisdurchmesser, sondern auch in ihrer Zähnezahl. Im vorliegenden Beispiel sind Geradverzahnungen dargestellt, es kann sich aber auch um Schrägverzahnungen handeln. Im vorliegenden Beispiel erstrecken sich beide Verzahnungen vollständig um die Werkstückachse herum; eine oder beide Verzahnungen können jedoch z.B. auch nur segmentweise ausgebildet sein.

Das Werkstück 60 weist ausserdem eine Markierung auf. Im vorliegenden Beispiel wird die Markierung durch eine Bohrung 63 gebildet, die stirnseitig im grösseren der beiden Stirnräder in einem radial innerhalb der zweiten Verzahnung 62 gelegenen Bereich ausgebildet ist und parallel zur Werkstückachse C1 verläuft. Es sind aber auch andere Arten von Markierungen denkbar, z.B. eine Gravur, eine Fase, ein Vorsprung, eine Farbmarkierung, usw. Die Markierung kann auch an einer anderen Stelle des Werkstücks ausgebildet sein. Beispielweise kann eine Bohrung diametral durch die Welle verlaufen, oder die Welle kann eine Fase aufweisen. Viele weitere Varianten sind denkbar.

Die Positioniervorrichtung 100 weist ein Basiselement 110 auf, das in der Feinbearbeitungsmaschine der Fig. 1 mit dem Maschinenbett 10 verbunden ist. An dem Basiselement 110 ist ein Sensorträger 112 in Form eines Schwenkarms befestigt. Der Sensorträger 112 ist gegenüber dem Basiselement 110 und somit gegenüber dem Maschinenbett 10 um eine horizontale Achse C5 zwischen einer Parkstellung (Fig. 2) und einer Messstellung (Figuren 3 bis 6) verschwenkbar.

Der Sensorträger 112 trägt zwei Einzentriersensoren 121, 122, wobei der erste Einzentriersensor 121 entlang einer radialen Messrichtung R auf die Referenzverzahnung 61 und der zweite Einzentriersensor 122 ebenfalls entlang der radialen Messrichtung R auf die zu bearbeitende Verzahnung 62 ausgerichtet ist. Bei den Einzentriersensoren 121, 122 handelt es sich z.B. um übliche induktive oder kapazitive Abstandssensoren, die durch eine Abstandsmessung erkennen, ob sie auf einen Zahnkopf oder eine Zahnlücke ausgerichtet sind. Die Einzentriersensoren 121, 122 ermöglichen dadurch eine schnelle Prüfung der Verzahnungen 61, 62 und eine Ermittlung der Lage aller Zahnlücken, während das Werkstück 60 rotiert.

Der Sensorträger 112 trägt ausserdem eine Markierungserfassungseinrichtung 130, die im vorliegenden Beispiel aus einem einzigen Markierungssensor 131 (siehe Fig. 4) besteht. Der Markierungssensor 131 ist im vorliegenden Beispiel, ähnlich wie die Einzentriersensoren 121, 122, als induktiver oder kapazitiver Abstandssensor ausgebildet.

Er ist auf diejenige Stirnseite des Werkstücks 60 ausgerichtet, in der die Bohrung 63 ausgebildet ist. Wenn das Werkstück 60 rotiert, registriert der Markierungssensor 131 eine Abstandsänderung entlang einer Markierungserfassungsrichtung M, wenn die Bohrung an ihm vorbeistreicht. Auf dieser Basis kann die Maschinensteuerung 70 den Drehwinkel des Werkstücks 60 ermitteln, bei dem die Bohrung 63 mit dem Markierungssensor 131 fluchtet. Je nach Art und Anbringung der Markierung können auch andere Markierungssensoren eingesetzt werden, z.B. ein optischer Sensor. Der Markierungssensor ermöglicht es, anhand der Lage der Markierung eindeutig eine Referenzzahnstruktur, insbesondere einen Referenzzahn oder eine Referenzzahnlücke, in der Referenzverzahnung 61 zu identifizieren.

Der Sensorträger 112 trägt des Weiteren eine Referenzvermessungseinrichtung 140, um die Referenzzahnstruktur zu vermessen und auf diese Weise mit hoher Präzision eine Referenzdrehwinkellage des Werkstücks 60 zu ermitteln. Die Referenzvermessungseinrichtung 140 ist radial in Richtung der Werkstückachse C1 ausgerichtet. Im vorliegenden Beispiel ist die Referenzvermessungseinrichtung 140 als taktiler Sensor ausgebildet. Der taktile Sensor weist eine Basis auf, die mit dem Sensorträger 112 verbunden ist, sowie eine Tastspitze 141, die gegenüber der Basis zwischen einer zurückgezogenen Stellung (siehe Fig. 5) und einer ausgefahrenen Stellung (siehe Fig. 6) aus- und einfahrbar ist. Dadurch kann die Tastspitze 141 entlang einer Einführrichtung E in die Referenzverzahnung 61 eingefahren werden, ohne dass dazu der Sensorträger 112 bewegt zu werden braucht. Die Einführrichtung E entspricht hier einer radialen Richtung bezüglich der Werkstückachse C1. Die Referenzvermessungseinrichtung 140 kann aber auch auf andere Weise ausgebildet sein, z.B. als optischer Sensor.

Schliesslich trägt der Sensorträger 112 einen Tangentiallagesensor 152. Dieser ist auf ein Lagereferenztarget 151 ausgerichtet, das über einen Referenzträger 42 am Drehturm 40 angeordnet ist. Der Tangentiallagesensor 152 ist, ähnlich wie die Einzentriersensoren 121, 122 und der Markierungssensor 131, als Abstandssensor ausgebildet. Er misst in der Messstellung einen Abstand des Tangentiallagesensors 152 zum Lagereferenztarget 151 entlang einer Tangentialrichtung T bezüglich des Werkstücks 60. Anhand des gemessenen Abstands können Messfehler der Referenzdrehwinkellage aufgrund von Längenänderungen und Verzügen wegen thermischen Effekten, die dazu führen, dass die Referenzvermessungseinrichtung 140 nicht mehr exakt radial auf die Werkstückachse C1 ausgerichtet ist, korrigiert werden. Dadurch kann die Genauigkeit der ermittelten Referenzwinkellage verbessert werden. Der Tangentiallagesensor 152 und das Lagereferenztarget 151 können alternativ auch vertauscht werden.

### Bearbeitung eines Werkstücks

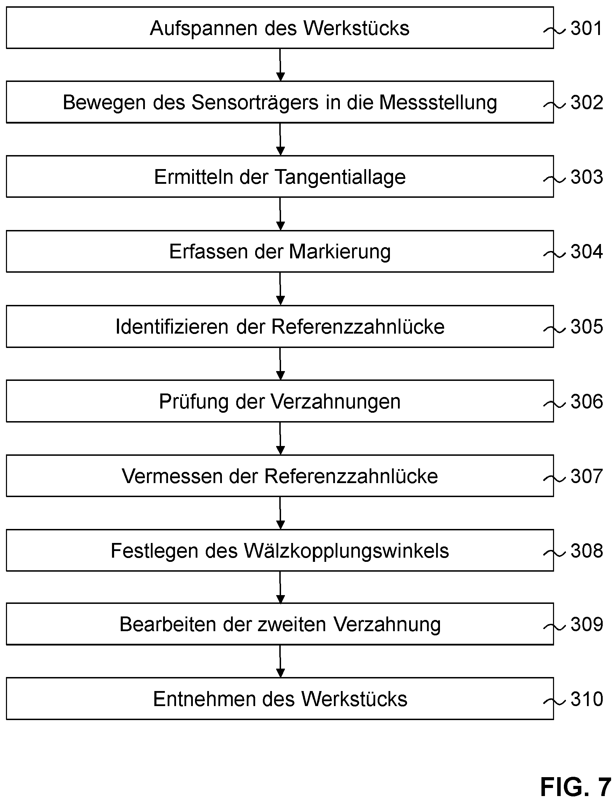

Die Figur 7 illustriert beispielhaft einen Ablaufplan für die Bearbeitung des Werkstücks 60 mit der Feinbearbeitungsmaschine der Fig. 1.

In Schritt 301 wird das Werkstück 60 auf der Werkstückspindel 50 aufgespannt. In Schritt 302 wird der Sensorträger 112 aus der Parkstellung der Fig. 2 in die Messstellung der Figuren 3 bis 6 gebracht. In Schritt 303 wird die Tangentiallage des Sensorträgers 112 mit Hilfe des Tangentiallagesensors 152 ermittelt und daraus ein Korrekturwert für die zu ermittelnde Referenzdrehwinkellage bestimmt. In Schritt 304 wird die Lage der Bohrung 63 mit Hilfe der Markierungserfassungseinrichtung 130 erfasst. In Schritt 305 wird auf dieser Basis die Referenzzahnstruktur identifiziert.

In Schritt 306 folgt eine Prüfung der beiden Verzahnungen 61, 62 mit Hilfe der Einzentriersensoren 121, 122. Dabei wird einerseits eine Konsistenzprüfung durchgeführt, ob sich an der Stelle, an der sich gemäss Markierung die Referenzzahnstruktur befinden sollte, überhaupt die gewünschte Art von Zahnstruktur befindet. Andernfalls wird der Vorgang gestoppt, und es wird eine Fehlermeldung ausgegeben. Zum anderen wird geprüft, wie die zweite Verzahnung relativ zur ersten Verzahnung ausgerichtet ist. Dabei wird einerseits überprüft, ob eine Zahnstruktur der zweiten Verzahnung innerhalb akzeptabler Toleranzen mit der Referenzzahnstruktur fluchtet; andererseits wird eine Prüfung auf Vorbearbeitungsfehler durchgeführt. Wenn diese Prüfung ergibt, dass die zweite Verzahnung erfolgreich bearbeitet werden kann, wird der Vorgang fortgesetzt. Andernfalls wird der Vorgang gestoppt, und das Werkstück wird als NIO-Teil verworfen.

In Schritt 307 wird nun die Referenzzahnstruktur vermessen. Dazu wird das Werkstück 60 mit der Werkstückspindel 50 in eine Drehwinkellage gebracht, in der die Tastspitze 131 in die Referenzverzahnung eingefahren werden kann. Die Referenzzahnstruktur wird nun mit einem Verfahren, das an sich aus der Verzahnungsmessung bekannt ist, vermessen, indem geprüft wird, in welchen Drehwinkellagen des Werkstücks die Tastspitze 131 die Rechts- und Linksflanken der Referenzzahnstruktur berührt. Daraus wird die Referenzwinkellage des Werkstücks ermittelt.

In Schritt 308 wird auf dieser Basis der Wälzkopplungswinkel zwischen Werkstück 60 und Schleifschnecke 31 festgelegt. Der Sensorträger 112 wird in die Parkstellung zurückbewegt, und der Drehturm 40 wird um 180° um die C3-Achse verschwenkt, um die Werkstückspindel 50 in die Bearbeitungsposition zu bringen. Nun wird in Schritt 309 die zu bearbeitende Verzahnung 62 des Werkstücks 60 mit der Schleifschnecke 31 bearbeitet. Der Drehturm 40 wird nun erneut um 180° verschwenkt, und das bearbeitete Werkstück 60 wird in Schritt 310 entnommen. Die bearbeitete Verzahnung 62 ist nun genau in der gewünschten Weise zur Referenzverzahnung 61 ausgerichtet.

Selbstverständlich sind verschiedenste Modifikationen an diesem beispielhaften Ablaufplan denkbar.

### Werkstück mit zwei Aussenverzahnungen: Positioniervorrichtung mit vertikaler Schwenkachse

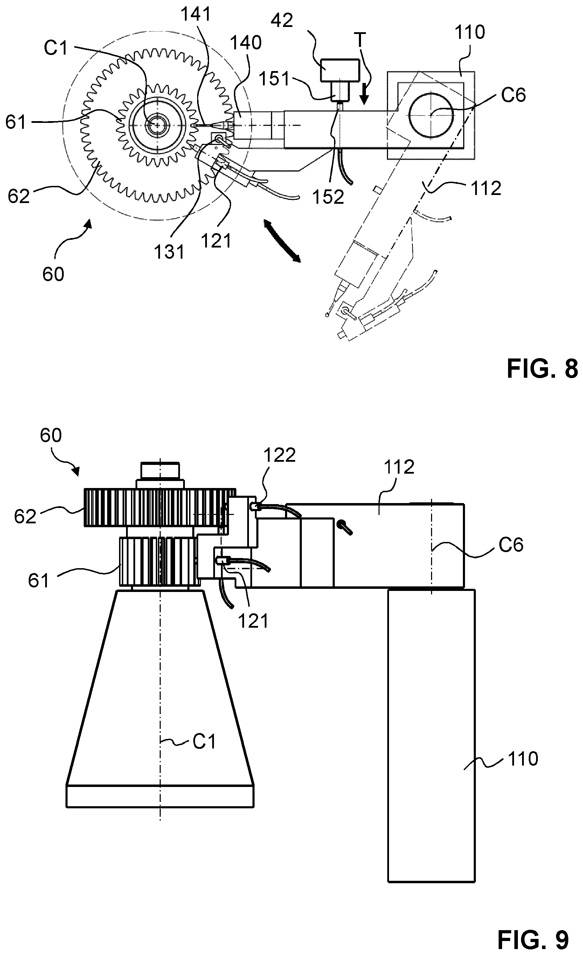

In Fig. 8 ist eine Positioniervorrichtung gemäss einer zweiten Ausführungsform dargestellt. Gleich oder ähnlich wirkende Komponenten sind mit den gleichen Bezugszeichen wie in den Figuren 1 bis 6 bezeichnet. Diese Positioniervorrichtung unterscheidet sich von der Positioniervorrichtung der Figuren 1 bis 6 dadurch, dass das Sensorträger 112 nicht um eine horizontale Achse, sondern um eine vertikale Achse C6 gegenüber dem Basiselement 110 verschwenkbar ist. Dies ist insbesondere dann vorteilhaft, wenn das Werkstück 60 so aufgespannt werden soll, dass die grössere der beiden Verzahnungen 61, 62 oberhalb der kleineren Verzahnung angeordnet ist. Es ist dann nicht mehr möglich, den Sensorträger 112 kollisionsfrei um eine horizontale Achse einzuschwenken.

Dies wird in der Fig. 9 illustriert, in der eine Positioniervorrichtung gemäss einer dritten Ausführungsform dargestellt ist. Gleich oder ähnlich wirkende Komponenten sind wiederum mit den gleichen Bezugszeichen wie in den Figuren 1 bis 6 bezeichnet. Das Werkstück 60 steht nun gegenüber der Ausführungsform der Fig. 8 auf dem Kopf. Die Anordnung der verschiedenen Sensoreinrichtungen auf dem Sensorträger 112 ist entsprechend angepasst. Es ist erkennbar, dass der Sensorträger 112 kollisionsfrei um die vertikale Achse C6 ein- und ausschwenkbar ist.

### Werkstück mit zwei Aussenverzahnungen: Positioniervorrichtung mit linearer Verschiebeachse

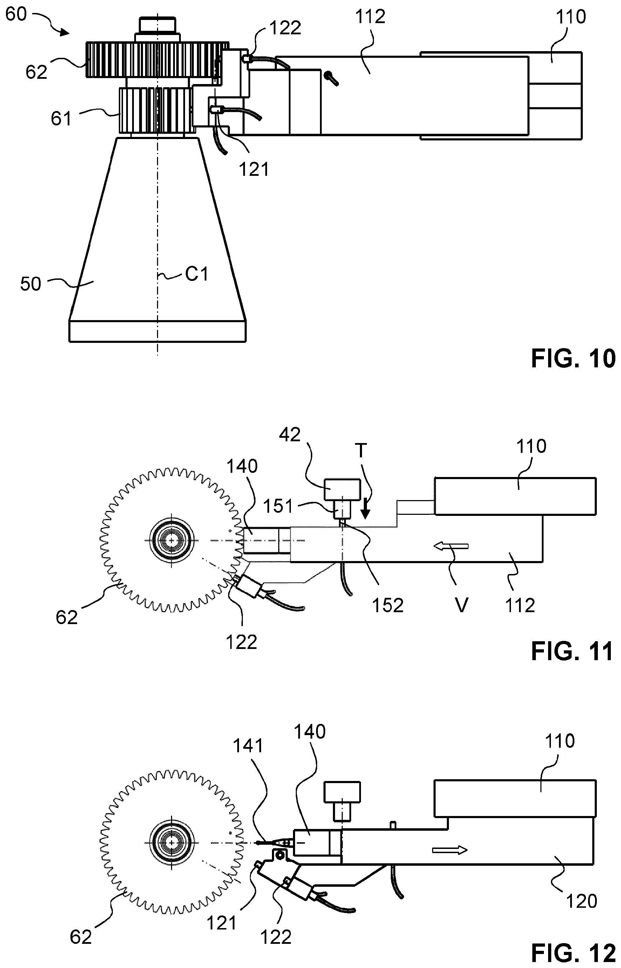

Alternativ ist es auch möglich, den Sensorträger zu verschieben. Dies ist in den Figuren 10 bis 12 illustriert, die eine Positioniervorrichtung gemäss einer vierten Ausführungsform zeigen. Der Sensorträger 112 ist hier zwischen einer Messstellung (Fig. 11) und einer Parkstellung (Fig. 12) linear verschiebbar. Die lineare Verschieberichtung V fällt hier mit der Einführrichtung E der Tastspitze 141 zusammen. Die Ein- und Ausfahrbewegung der Tastspitze 141 erfolgt aber weiterhin unabhängig von der Verschiebung des Sensorträgers 112.

### Werkstück mit zwei Aussenverzahnungen: Positioniervorrichtung am Drehturm

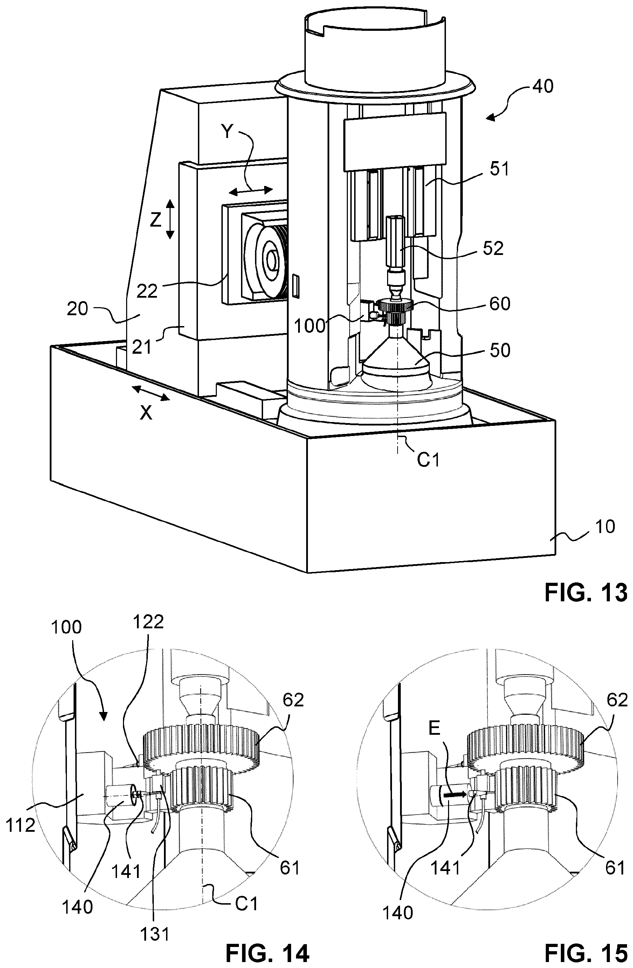

Es ist auch möglich, die Positioniervorrichtung am Drehturm 40 anzubringen. Dadurch können unproduktive Nebenzeiten weiter minimiert werden. Dies ist in den Figuren 13 bis 15 illustriert, in denen eine Feinbearbeitungsmaschine mit einer Positioniervorrichtung gemäss einer fünften Ausführungsform dargestellt ist. Gleich oder ähnlich wirkende Komponenten sind wiederum mit den gleichen Bezugszeichen wie in den Figuren 1 bis 6 bezeichnet. Der Sensorträger 112 ist hier am Drehturm 40 befestigt und gegenüber diesem entlang der vertikalen Richtung verschiebbar. Die Tastspitze 141 ist auch hier radial zur Werkstückachse C1, also horizontal, in die Referenzverzahnung einführbar.

### Markierungserfassung durch Differenzbildung

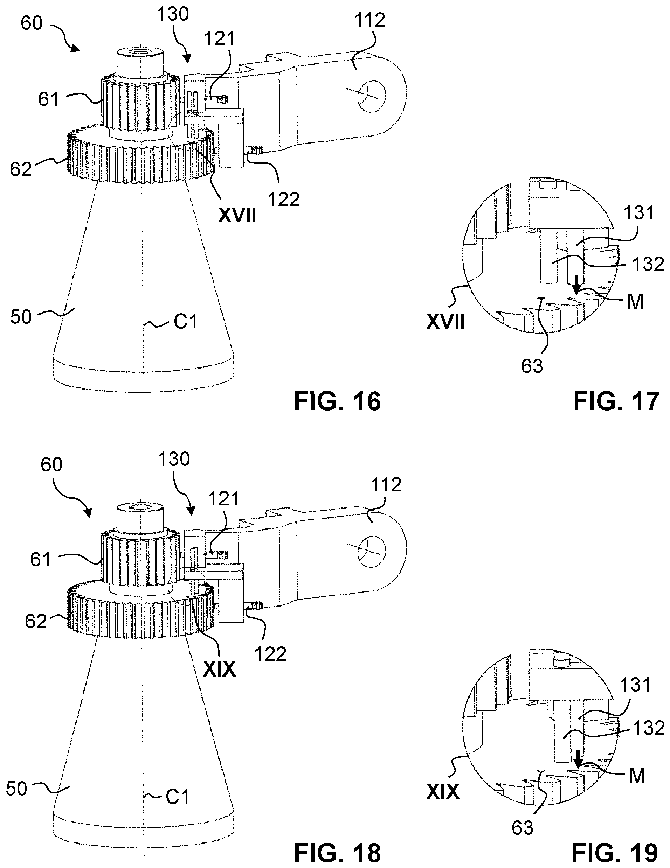

In den Figuren 16 und 17 ist eine Positioniervorrichtung gemäss einer sechsten Ausführungsform illustriert, deren Markierungserfassungseinrichtung 130 zwei Markierungssensoren 131, 132 aufweist. Bei den Markierungssensoren handelt es sich hier wiederum um induktive oder kapazitive Abstandssensoren, die den Abstand von der Stirnseite des jeweiligen Sensors zur gegenüberliegenden Oberfläche des Werkstücks ermitteln. Sie geben jeweils ein Signal aus, das den gemessenen Abstand anzeigt. Die beiden Markierungssensoren 131, 132 sind bezüglich der Umfangsrichtung des Werkstücks nebeneinander, also bezüglich der Radialrichtung hintereinander angeordnet. Wenn sich das Werkstück dreht, streicht die Bohrung 63 am äusseren Markierungssensor 131 vorbei, während der innere Markierungssensor 132 von der Bohrung unbeeinflusst bleibt.

Alternativ können die Markierungssensoren 131, 132 auch bezüglich der Umfangsrichtung des Werkstücks hintereinander, also auf demselben Radius bezüglich der Werksstückachse, angeordnet sein. Eine entsprechende siebente Ausführungsform ist in den Figuren 18 und 19 illustriert. In diesem Fall erfassen die beiden Markierungssensoren die Bohrung zeitlich nacheinander.

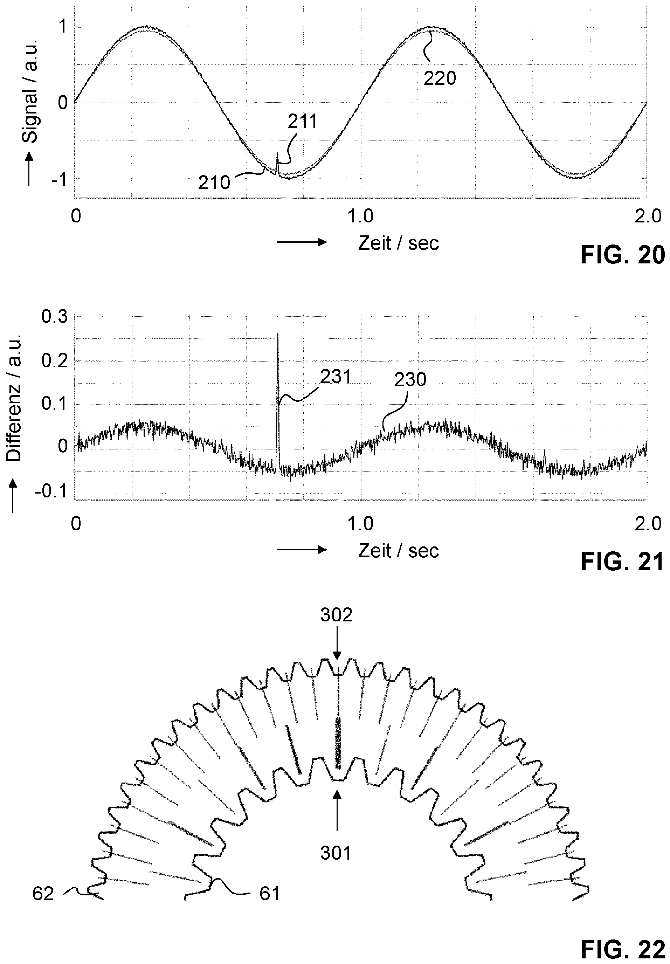

Die resultierenden Ausgangssignale der sechsten Ausführungsform sind beispielhaft in der Fig. 20 illustriert. Im vorliegenden Beispiel ist das Werkstück mit einem verhältnismässig grossen Planlauffehler aufgespannt. Aufgrund des Planlauffehlers registriert jeder der beiden Markierungssensoren ein sinusförmiges Signal 210, 220, dessen Frequenz der Rotationsfrequenz des Werkstücks entspricht. Das Signal 210 des ersten Markierungssensors 131 weist ausserdem einen Peak 211 auf, der durch die vorbeistreichende Bohrung 63 entsteht. Der Peak zeigt die Drehwinkelstellung an, in der die Bohrung 63 dem Markierungssensor 131 gegenübersteht. Da die Bohrung 63 einen verhältnismässig kleinen Durchmesser hat, der kleiner als die aktive Fläche des Sensors 131 ist, ist dieses Signal im Vergleich zur Amplitude des Sinusanteils verhältnismässig klein. Es ist daher mit üblichen Signalverarbeitungsverfahren nicht immer einfach, den Peak eindeutig zu detektieren.

Um eine eindeutige Erkennung des Peaks zu erleichtern, kann die Differenz der Signale 210, 220 der beiden Markierungssensoren 131, 132 gebildet werden. Das Differenzsignal ist in der Fig. 21 dargestellt. Das Differenzsignal 230 weist nun einen Peak 231 auf, der deutlich das überlagerte Restsinussignal und das Rauschen überragt. Die Erkennung des Peaks kann nun z.B. durch eine einfache Schwellwertüberwachung erfolgen.

Bei der siebenten Ausführungsform führt die Differenzbildung dazu, dass zwei Peaks mit entgegengesetzten Vorzeichen entstehen, die zeitlich aufeinander folgen. Auch diese beiden Peaks können sicher erkannt werden.

### Identifikation einer Referenzzahnstruktur mit einem "Best-Fit"-Verfahren

Statt mit Hilfe einer Markierung kann die Referenzzahnstruktur mit einem "Best Fit"-Verfahren identifiziert werden. Dies wird anhand der Fig. 22 illustriert.

Zunächst wird die Drehwinkellage von Zahnstrukturen der ersten Verzahnung 61 mit einem ersten Einzentriersensor und die Drehwinkellage von Zahnstrukturen der zweiten Verzahnung 62 mit einem zweiten Einzentriersensor ermittelt. Sodann werden daraus Drehwinkelabstände zwischen Zahnstrukturen der ersten Verzahnung 61 und Zahnstrukturen der zweiten Verzahnung 62 bestimmt. Diese Drehwinkelabstände werden mit einem vorgegebenen Abstandssollwert verglichen. Es wird diejenige Zahnstruktur der ersten Verzahnung 61 gesucht, die mit der besten Genauigkeit einen Drehwinkelabstand zu einer beliebigen Zahnstruktur der zweiten Verzahnung 62 aufweist, der dem vorgegebenen Abstandssollwert entspricht ("Best Fit"). Beispielsweise wird diejenige Zahnlücke der ersten Verzahnung 61 gesucht, die den minimalen Drehwinkelabstand zu einer Zahnlücke der zweiten Verzahnung 62 aufweist, also möglichst genau mit einer Zahnlücke der zweiten Verzahnung 62 fluchtet. In der Fig. 22 ist dies die Zahnlücke 301. Diese fluchtet nahezu perfekt mit der Zahnlücke 302 der zweiten Verzahnung 62, und der Drehwinkelabstand von allen anderen Zahnlücken der ersten Verzahnung 61 zur nächsten Zahnlücke der zweiten Verzahnung 62 ist grösser als für das Zahnlückenpaar 301, 302. Die Zahnlücke 301 wird dadurch als Referenzzahnlücke identifiziert.

Wenn sich der Quotient der Zähnezahlen der beiden Verzahnungen kürzen lässt, gibt es mehrere Zahnstrukturen der ersten Verzahnung, die bei idealen Verhältnissen den gleichen Drehwinkelabstand zu einer Zahnstruktur der zweiten Verzahnung haben. Anders ausgedrückt, wenn beispielsweise die erste Verzahnung eine Zähnezahl von *kN*₁ hat und die zweite Verzahnung eine Zähnezahl von *kN*₂ hat, wobei *k*, *N*₁ und *N*₂ natürliche Zahlen grösser als 1 sind, und wobei *N*₁ und *N*₂ keinen gemeinsamen Primfaktor ausser 1 haben, gibt es theoretisch *k* Drehwinkel des Werkstücks, an denen die Zahnstrukturen der ersten und zweiten Verzahnung den gleichen Drehwinkelabstand haben. In diesem Fall kann bei der Ermittlung des "Best Fit" die Abweichung des Drehwinkelabstands vom Abstandssollwert über *k* Zahnstrukturen im Drehwinkelabstand von 2*π*/*k* gemittelt werden.

### Werkstück mit zwei Innenverzahnungen: Positioniervorrichtung mit horizontaler Schwenkachse

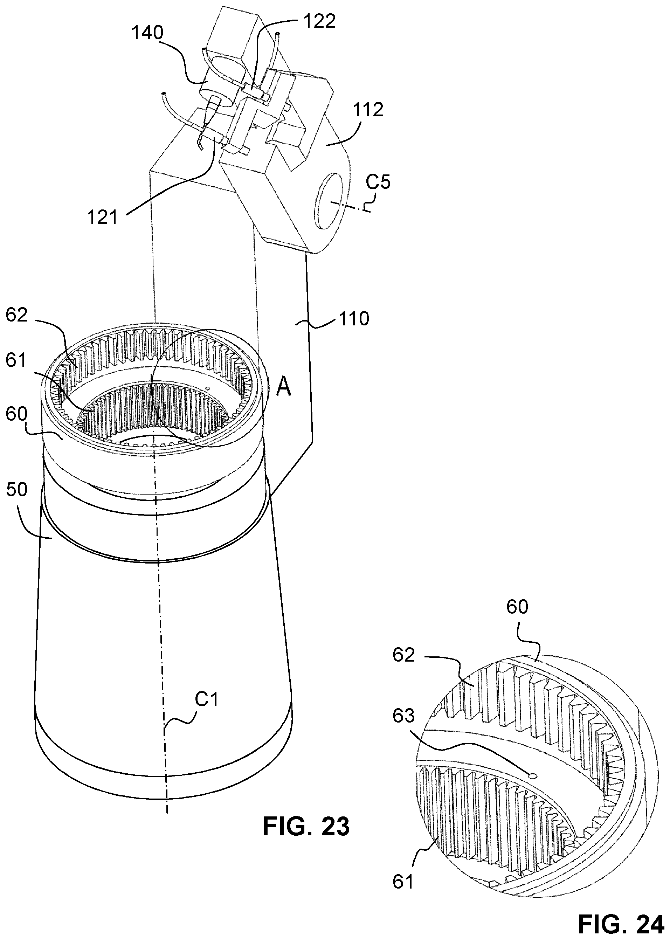

In den Figuren 23 bis 27 ist eine Positioniervorrichtung gemäss einer achten Ausführungsform dargestellt. Gleich oder ähnlich wirkende Komponenten sind wiederum mit den gleichen Bezugszeichen wie in den Figuren 1 bis 6 bezeichnet. Die Positioniervorrichtung der achten Ausführungsform ist dazu ausgebildet, eine Referenzdrehwinkellage eines doppelverzahnten Werkstücks 60 zu ermitteln, dessen Referenzverzahnung 61 und zu bearbeitende Verzahnung 62 beide als Innenverzahnungen ausgebildet sind.

Das Werkstück 60 trägt wiederum eine Markierung 63 in Form einer Bohrung (siehe Fig. 24). Diese Bohrung ist im vorliegenden Beispiel radial ausserhalb der Referenzverzahnung 61 und radial innerhalb der zu bearbeitenden Verzahnung 62 ausgebildet und verläuft parallel zur Werkstückachse C1.

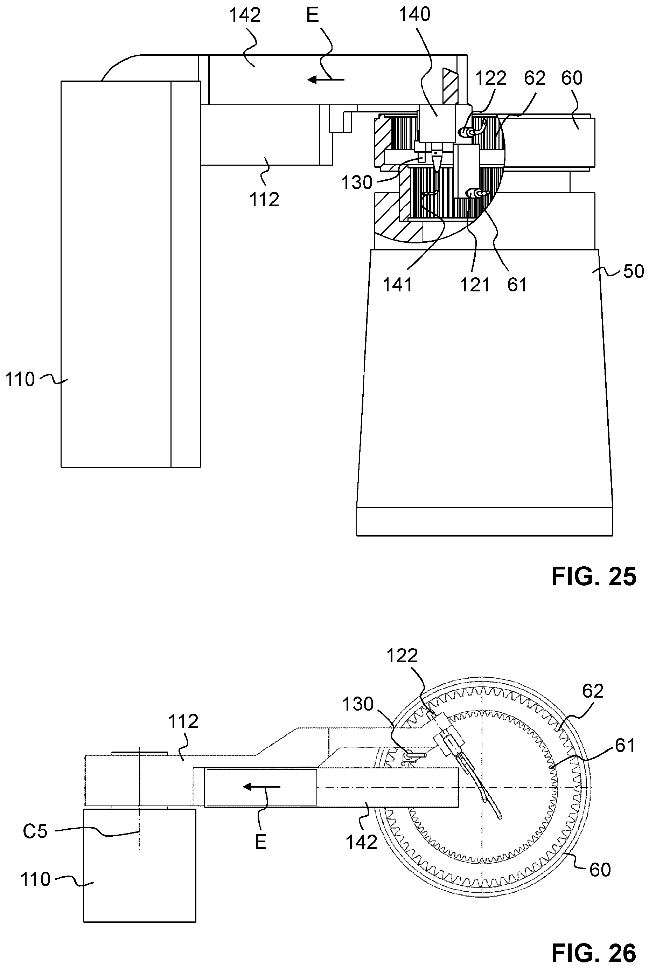

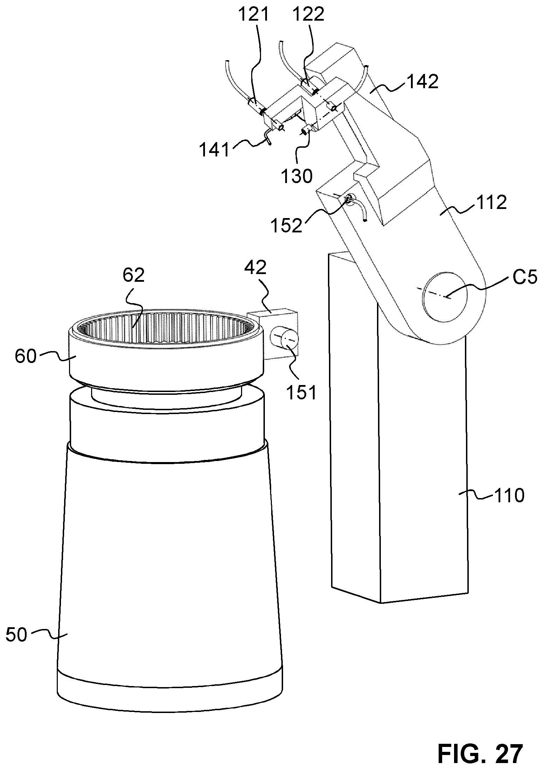

Die Positioniervorrichtung der achten Ausführungsform ist grundsätzlich ähnlich zur Positioniervorrichtung der ersten Ausführungsform aufgebaut. Sie weist wiederum ein Basiselement 110 auf, das mit einem Maschinenbett oder Werkstückträger einer Feinbearbeitungsmaschine verbunden ist. An diesem Basiselement 110 ist wiederum ein Sensorträger 112 in Form eines Schwenkarms befestigt. Der Sensorträger 112 ist wiederum gegenüber dem Basiselement 110 um eine horizontale Schwenkachse C5 zwischen einer Parkstellung (Figuren 22, 27) und einer Messstellung (Figuren 25, 26) verschwenkbar.

Der Sensorträger 112 trägt wiederum zwei Einzentriersensoren 121, 122. Diese sind radial nach aussen auf die nach innen weisenden Verzahnungen 61, 62 ausgerichtet.

Der Sensorträger 112 trägt zudem eine Markierungserfassungseinrichtung 130, die hier wie bei der ersten Ausführungsform nur einen einzigen Markierungssensor umfasst (siehe Figuren 25 bis 27).

Des Weiteren trägt der Sensorträger 112 eine Referenzvermessungseinrichtung 140, die hier erneut als taktiler Sensor mit einer Tastspitze 141 ausgebildet ist. Im Gegensatz zur geraden Tastspitze der ersten Ausführungsform ist die Tastspitze 141 hier abgewinkelt. Sie weist in Richtung ihres freien Endes einen Tastabschnitt auf, der in der Messstellung horizontal ausgerichtet ist und dazu vorgesehen ist, radial in Zahnlücken der Referenzverzahnung 61 eingeführt zu werden. Sie weist zudem einen Verbindungsabschnitt auf, der in der Messstellung vertikal ausgerichtet ist und die Tastspitze mit einer Basis der Referenzvermessungseinrichtung 140 verbindet. Der Verbindungsabschnitt und der Tastabschnitt sind über einen Krümmungsabschnitt miteinander verbunden. Um die Tastspitze 141 mit ihrem Tastabschnitt in die Zahnlücken der Referenzverzahnung einzuführen, ist die Basis der Referenzvermessungseinrichtung auf einem Linearschlitten 142 angeordnet. Der Linearschlitten 142 ist auf dem Sensorträger 112 entlang einer Einführrichtung E linear verfahrbar. Die Einführrichtung verläuft in der Messstellung radial.

In der Figur 27 ist zusätzlich eine optionale Lagereferenzvorrichtung illustriert. Wie bei den vorstehend diskutierten Ausführungsformen wirkt hier ein Tangentiallagesensor 152 am Sensorträger 112 mit einem Lagereferenztarget 151 an einem Referenzträger 42 zusammen, um die Lage des Sensorträgers 112 bezüglich einer tangential zum Werkstück 60 verlaufenden Tangentialrichtung zu bestimmen. Wiederum können die Rollen des Tangentiallagesensors 152 und des Lagereferenztargets 151 auch vertauscht sein, d.h. der Tangentiallagesensor kann am Referenzträger angeordnet sein, und das Lagereferenztarget kann sich am Sensorträger befinden.

Die Identifikation einer Referenzzahnstruktur der Referenzverzahnung 61 und die Ermittlung einer Referenzdrehwinkellage des Werkstücks 60 durch Vermessung der Referenzzahnstruktur mit der Referenzvermessungseinrichtung erfolgen ähnlich wie bei der ersten Ausführungsform. Die zu bearbeitende Verzahnung 62 kann anschliessend mit einem Feinbearbeitungsverfahren bearbeitet werden, das sich zur Bearbeitung von Innenverzahnungen eignet, z.B. durch Wälzschälen. Dazu kann der Wälzkopplungswinkel wiederum auf der Basis der ermittelten Referenzdrehwinkellage festgelegt werden.

In den Figuren 23 bis 27 ist der Innendurchmesser der Referenzverzahnung 61 kleiner als der Innendurchmesser der zu bearbeitenden Verzahnung 62. Dadurch kann der Sensorträger 112 problemlos kollisionsfrei durch eine einfache Schwenkbewegung in die Messposition gebracht werden.

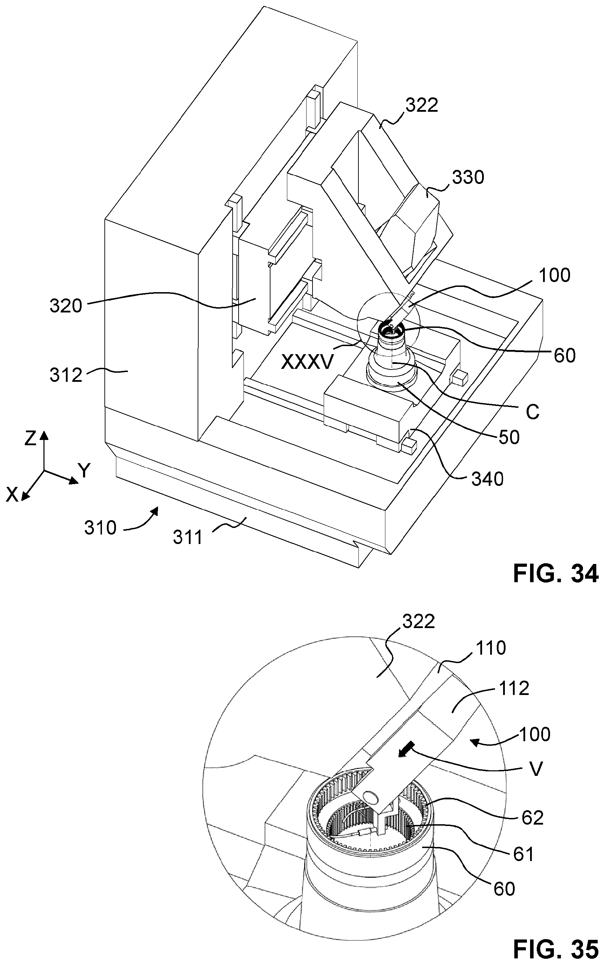

Wenn dagegen die Referenzverzahnung 61 einen grösseren Innendurchmesser als die zu bearbeitenden Verzahnung 62 haben sollte, sind folgende Überlegungen zu beachten: Aus Gründen der Zugänglichkeit für das Bearbeitungswerkzeug muss die zu bearbeitende Verzahnung 62 meistens nach wie vor oben angeordnet sein. Somit ist es nicht mehr möglich, den Sensorträger 112 allein durch eine einfache Schwenkbewegung um eine horizontale Achse kollisionsfrei in die Messposition zu bringen. In diesem Fall gibt es mehrere Optionen. Eine erste Option besteht darin, dass eine zusätzliche Achse für die Positioniervorrichtung vorgesehen wird, z.B. eine zusätzliche lineare Verschiebeachse. Beispielsweise könnte der gesamte Sensorträger 112 auf einem Linearschlitten montiert sein, der radial bezüglich der Werkstückachse auf einem Halter verschiebbar ist, wobei dieser Halter wiederum um die Achse C5 schwenkbar am stationären Basiselement 110 angebracht ist, oder das Basiselement 110 selbst könnte linear gegenüber dem Maschinenbett verschiebbar sein. Eine zweite Option besteht darin, den Sensorträger 112 an einem Maschinenelement anzubringen, das ohnehin durch schon vorhandene Maschinenachsen bewegbar ist, z.B. am Werkzeugträger. Dies wird nachstehend noch näher anhand der Figuren 34 und 35 erläutert. Selbstverständlich sind auch noch weitere Optionen denkbar.

### Werkstück mit zwei Innenverzahnungen: Positioniervorrichtung mit linearer Verschiebeachse

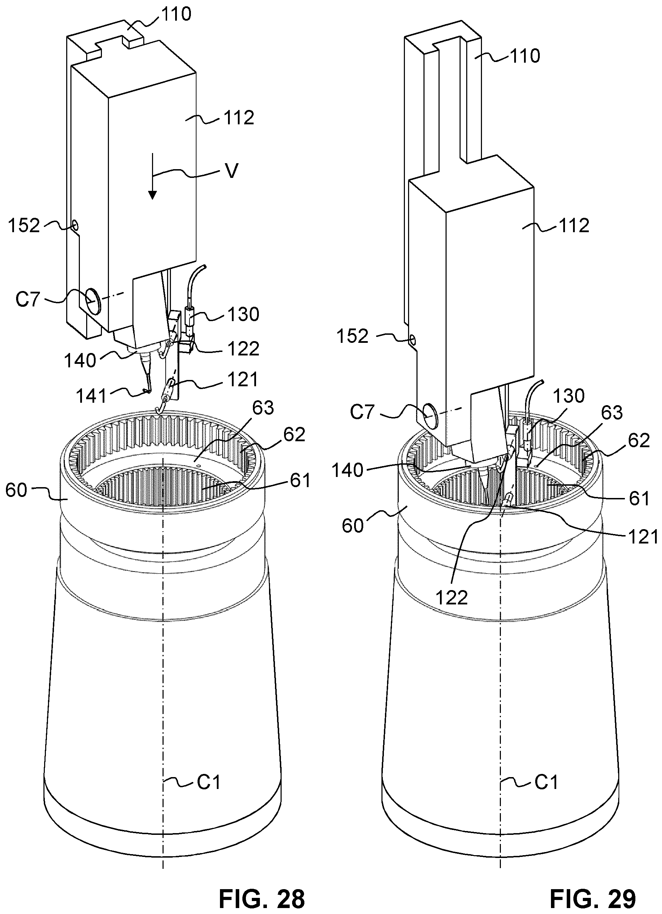

In den Figuren 28 bis 31 ist eine Positioniervorrichtung gemäss einer neunten Ausführungsform dargestellt. Gleich oder ähnlich wirkende Komponenten sind wiederum mit den gleichen Bezugszeichen wie in den Figuren 1 bis 6 bezeichnet. Wie schon die Positioniervorrichtung der achten Ausführungsform ist auch die Positioniervorrichtung der neunten Ausführungsform dazu ausgebildet, eine Referenzdrehwinkellage eines doppelverzahnten Werkstücks 60 zu ermitteln, dessen Referenzverzahnung 61 und zu bearbeitende Verzahnung 62 beide als Innenverzahnungen ausgebildet sind.

Anders als in der achten Ausführungsform ist dazu der Sensorträger 112 gegenüber dem Basiselement 110 linear entlang einer Verschieberichtung V verschiebbar, um den Sensorträger 112 von der Parkstellung (Fig. 28) in die Messstellung (Fig. 29) zu bewegen. Am Sensorträger 112 sind wiederum zwei Einzentriersensoren 121, 122 sowie eine Markierungserfassungseinrichtung 130 statt montiert. Ebenfalls ist am bzw. im Sensorträger 112 wiederum ein Tangentiallagesensor 152 angebracht, der mit einem nicht dargestellten Lagereferenztarget zusammenwirkt.

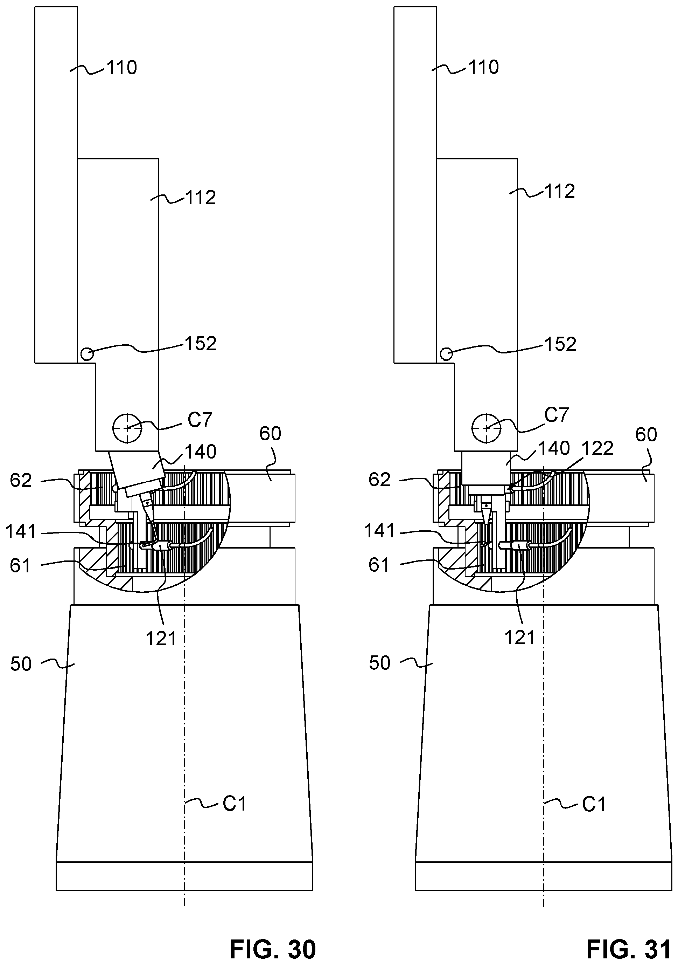

Wiederum trägt der Sensorträger 112 zudem eine Referenzvermessungseinrichtung 140 in Form eines taktilen Sensors mit einer gekrümmten Tastspitze 141. Um die Tastspitze 141 in Eingriff mit der Referenzverzahnung 61 zu bringen, ist die Basis der Referenzvermessungseinrichtung 140 schwenkbar mit dem Sensorträger 112 verbunden. Die entsprechende Schwenkachse C7 verläuft hier horizontal. Die Referenzvermessungseinrichtung 140 ist dadurch zwischen einer ausgeschwenkten Stellung (Fig. 30), in der die Tastspitze 141 ausser Eingriff mit der Referenzverzahnung 61 ist, und einer eingeschwenkten Stellung (Fig. 31), in der die Tastspitze 141 in Eingriff mit der Referenzverzahnung 61 steht, verschwenkbar. Statt einer horizontal verlaufenden Schwenkachse C7 ist auch eine vertikal oder schräg im Raum verlaufende Achse denkbar.

Auch diese Ausführungsform kann so abgewandelt werden, dass der Sensorträger 112 auch dann kollisionsfrei in die Messposition gebracht werden kann, wenn die obere, zu bearbeitende Verzahnung 62 einen kleineren Innendurchmesser als die unten liegende Referenzverzahnung 61 aufweist. Insbesondere ist es denkbar, hierzu eine zusätzliche lineare Verschiebeachse vorzusehen, mit der das Basiselement 110 entlang einer Radialrichtung bezüglich der Werkstückachse relativ zum Maschinenbett verschiebbar ist.

### Werkstück mit einer Aussenverzahnung und einer Innenverzahnung

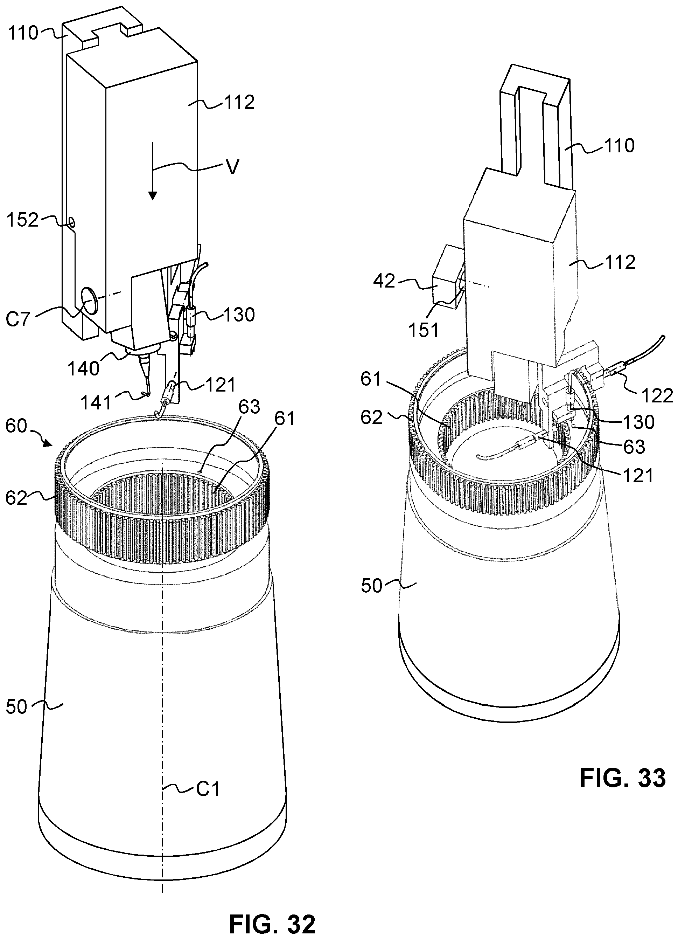

In den Figuren 32 und 33 ist eine Positioniervorrichtung gemäss einer zehnten Ausführungsform dargestellt. Gleich oder ähnlich wirkende Komponenten sind wiederum mit den gleichen Bezugszeichen wie in den Figuren 1 bis 6 bezeichnet. Diese Positioniervorrichtung ist dazu ausgebildet, eine Referenzdrehwinkellage eines doppelverzahnten Werkstücks 60 zu ermitteln, dessen Referenzverzahnung 61 eine Innenverzahnung ist und dessen zu bearbeitende Verzahnung 62 eine Aussenverzahnung ist.

Die Positioniervorrichtung der zehnten Ausführungsform ist sehr ähnlich zur Positioniervorrichtung der neunten Ausführungsform aufgebaut. Der einzige wesentliche Unterschied besteht darin, dass der Einzentriersensor 122 nun radial nach innen ausgerichtet ist, um die zu bearbeitende Verzahnung 62 zu vermessen.

### Einsatz in einer Wälzschälmaschine

In einigen Ausführungsformen kann die Positioniervorrichtung an einem Bauteil einer Werkzeugmaschine, das durch ohnehin vorhandene Maschinenachsen relativ zum Werkstück bewegt werden kann, angebracht sein. Insbesondere kann die Positioniervorrichtung an einem beweglichen Werkzeugträger der Werkzeugmaschine angebracht sein, wobei der Werkzeugträger die Werkzeugspindel trägt.

Dies ist in den Figuren 34 und 35 illustriert. Diese Figuren zeigen eine Wälzschälmaschine, die gemäss der internationalen Patentanmeldung PCT/EP 2020/068945 vom 06. Juli 2020 aufgebaut ist und eine Positioniervorrichtung gemäss einer elften Ausführungsform trägt. Der Inhalt der internationalen Patentanmeldung PCT/EP 2020/068945 vom 06. Juli 2020 wird durch Verweis in die vorliegende Offenbarung aufgenommen.

Die Maschine weist ein Maschinenbett 310 auf. Das Maschinenbett 310 ist im Seitenriss etwa L-förmig, mit einem horizontalen Abschnitt 311 und einem vertikalen Abschnitt 312.

Am horizontalen Abschnitt 311 ist ein beweglicher Werkstückträger in Form eines Y-Schlittens 340 angeordnet. Der Y-Schlitten 340 ist entlang einer Y-Richtung gegenüber dem Maschinenbett 310 verschiebbar. Die Y-Richtung verläuft horizontal im Raum. Der Y-Schlitten 340 trägt eine Werkstückspindel 50, auf der ein vorverzahntes Werkstück 60 aufgespannt ist. Das Werkstück 60 ist auf der Werkstückspindel 50 um eine Werkstückachse (C-Achse) drehbar angetrieben. Die C-Achse verläuft vertikal im Raum. Im vorliegenden Beispiel weist das Werkstück 60 zwei Innenverzahnungen auf, nämlich eine Referenzverzahnung 61 und eine darüber angeordnete zu bearbeitenden Verzahnung 62.

Am vertikalen Abschnitt 312 des Maschinenbetts 310 ist ein Z-Schlitten 320 angeordnet. Dieser ist entlang einer vertikalen Z-Richtung gegenüber dem Maschinenbett 310 verschiebbar. Auf dem Z-Schlitten 320 ist ein Werkzeugträger in Form eines X-Schlittens 322 angeordnet. Der X-Schlitten trägt eine Werkzeugspindel 30. Der X-Schlitten 322 ist entlang einer X-Richtung gegenüber dem Z-Schlitten 320 verschiebbar. Die X-Richtung verläuft horizontal im Raum und senkrecht zur Y- und Z-Richtung. Gemeinsam bilden der Z-Schlitten 320 und der X-Schlitten 322 einen Kreuzschlitten, der Verschiebungen der darauf montierten Werkzeugspindel 30 entlang der zueinander senkrechten Z- und X-Richtungen ermöglicht.

Die Werkzeugspindel 30 treibt ein auf ihr aufgespanntes Wälzschälwerkzeug zu einer Drehung um eine Werkzeugachse an. Das Wälzschälwerkzeug ist in den Figuren 34 und 35 vom X-Schlitten 322 verdeckt und daher nicht sichtbar. Die Werkzeugspindel 30 ist gegenüber dem X-Schlitten 322 um eine parallel zur X-Richtung verlaufende horizontale Schwenkachse (A-Achse) schwenkbar.

Der X-Schlitten 322 trägt ausserdem die Positioniervorrichtung 100, die in Fig. 35 vergrössert dargestellt ist. Die Positioniervorrichtung weist ein Basiselement 110 und einen darauf entlang einer Verschieberichtung V verschiebbaren Sensorträger 112 auf. Die Verschieberichtung V verläuft schräg zur Y- und Z-Richtung und senkrecht zur X-Richtung. Mit Hilfe der Maschinenachsen X, Y und Z sowie der Verschiebeachse V kann der Sensorträger 112 in die in den Figuren 34 und 35 gezeigte Messstellung gebracht werden.

Auf diese Weise ist es insbesondere möglich, den Sensorträger 112 selbst dann kollisionsfrei in die Messstellung zu bringen, wenn die zu bearbeitende Verzahnung 62 einen kleineren Innendurchmesser als die Referenzverzahnung 61 aufweist.

Die Positioniervorrichtung 100 ist in einem Bereich des X-Schlittens 322 angebracht, der genügend weit vom Wälzschälwerkzeug entfernt ist, dass die Positioniervorrichtung 100 während der Bearbeitung des Werkstücks 60 nicht stört.

### Lagereferenzvorrichtung

In allen vorstehend erläuterten Ausführungsbeispielen kann eine Lagereferenzvorrichtung zum Einsatz kommen, um die räumliche Lage der Positioniervorrichtung relativ zum Werkstückträger zu ermitteln. Während in einigen der vorstehend erläuterten Ausführungsbeispielen eine Lagereferenzvorrichtung dargestellt ist, die nur einen Tangentiallagesensor aufweist, kann die Lagereferenzvorrichtung auch Lagereferenzsensoren bezüglich anderer Raumrichtungen aufweisen.

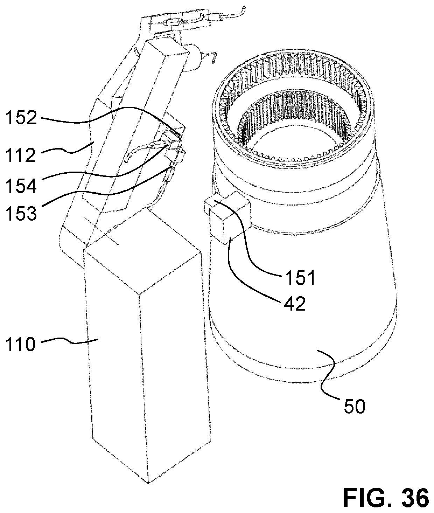

Dies ist in der Fig. 36 beispielhaft illustriert, die eine Positioniervorrichtung gemäss einer zwölften Ausführungsform zeigt. Die Positioniervorrichtung der Fig. 36 entspricht im Wesentlichen der Positioniervorrichtung der achten Ausführungsform. Sie unterscheidet sich hiervon nur durch die Ausgestaltung der Lagereferenzvorrichtung.

Die Lagereferenzvorrichtung weist in dieser Ausführungsform wiederum ein Lagereferenztarget 151 an einem Referenzträger 42 auf. Das Lagereferenztarget 151 ist quader- oder würfelförmig und bildet mindestens drei zueinander senkrechte Referenzflächen. Der Referenzträger 42 ist starr mit dem die Werkstückspindel 50 tragenden Werkstückträger verbunden. Am Sensorträger 112 sind nun drei Lagereferenzsensoren 152, 153 und 154 angeordnet, die in der Messstellung auf verschiedene Referenzflächen des Lagereferenztargets 151 ausgerichtet sind. Ein erster Lagereferenzsensor 152 bildet einen Tangentiallagesensor. Dieser Sensor ist tangential zum Werkstück auf eine entsprechende Referenzfläche des Lagereferenztargets 151 ausgerichtet, wobei die Referenzfläche eine tangential verlaufende Flächennormale aufweist. Ein zweiter Lagereferenzsensor 153 bildet einen Axiallagesensor. Dieser Sensor ist parallel zur Werkstückachse auf eine entsprechende Referenzfläche des Lagereferenztargets 151 ausgerichtet, wobei die Referenzfläche eine axial verlaufende Flächennormale aufweist. Ein dritter Lagereferenzsensor 154 bildet einen Radiallagesensor. Dieser Sensor ist radial zur Werkstückachse auf eine entsprechende Referenzfläche des Lagereferenztargets 151 ausgerichtet, wobei die Referenzfläche eine radial verlaufende Flächennormale aufweist. Statt eines einzigen Lagereferenztargets mit mehreren Referenzflächen können auch mehrere Lagereferenztargets vorhanden sein, wobei jedes dieser Lagereferenztargets eine entsprechende Referenzfläche für jeweils eine der Messrichtungen bildet.

Die Rollen der Lagereferenzsensoren 152, 153, 154 und des Lagereferenztargets 151 können auch vertauscht sein, d.h. die Lagereferenzsensoren können am Referenzträger angeordnet sein, und das Lagereferenztarget kann sich am Sensorträger befinden.

Die Lagereferenzsensoren sind bevorzugt Laserabstandssensoren, wie sie aus dem Stand der Technik an sich bekannt sind.

### Modifikationen

Während die Erfindung anhand von mehreren Ausführungsbeispielen erläutert wurde, ist die Erfindung nicht auf diese Ausführungsbeispiele beschränkt, und es sind eine Vielzahl von Modifikationen möglich. Einige Modifikationen wurden vorstehend schon beschrieben. Die Erfindung ist nicht auf die Anwendung im Rahmen der vorstehend beispielhaft genannten Wälzbearbeitungsverfahren wie Wälzschleifen oder Wälzschälen beschränkt. Vielmehr ist es auch möglich, die Erfindung im Rahmen von anderen Feinbearbeitungsverfahren von Doppel- und Mehrfachverzahnungen einzusetzen. Dabei kann es sich z.B. um andere Wälzbearbeitungsverfahren wie das Verzahnungshonen oder um Teilungsverfahren wie das Profilschleifen handeln. Wenn der Sensorträger schwenkbar mit einem Basiselement verbunden ist, kann die Schwenkachse nicht nur horizontal oder vertikal, sondern auch schräg im Raum verlaufen. Wenn der Sensorträger gegenüber dem Basiselement linear verschiebbar ist, kann die Verschieberichtung von der Einführrichtung der Tastspitze abweichen, wie das in einigen der vorstehend erläuterten Ausführungsbeispiele der Fall ist. Auch eine gekrümmte Verschieberichtung entlang eines Bogens ist denkbar. In allen Ausführungsformen ist es denkbar, anstelle einer Bohrung eine andere Art von Markierung zu verwenden und diese an einer anderen Stelle als dargestellt anzubringen. Entsprechend kann eine andere Art von Markierungssensor verwendet werden, die auf die Art der Markierung entsprechend angepasst ist, und die Markierungserfassungseinrichtung kann auf eine andere Weise mit dem Sensorträger verbunden sein. Eine Vielzahl weitere Modifikationen sind möglich.

### BEZUGSZEICHENLISTE

- 10: Maschinenbett
- 20: Werkzeugträger
- 21: Z-Schlitten
- 22: Y-Schlitten
- 30: Werkzeugspindel
- 31: Schleifschnecke
- 32: Werkzeugspindelantrieb
- 40: Drehturm / Werkstückträger
- 42: Referenzträger
- 50: Werkstückspindel
- 51: Gegenständer
- 52: Reitstock
- 60: Werkstück
- 61: erste Verzahnung (Referenzverzahnung)
- 62: zweite Verzahnung (zu bearbeitende Verzahnung)
- 63: Markierung (Bohrung)
- 70: Maschinensteuerung
- 71: Steuerungsmodul
- 72: Bedientafel
- 100: Positioniervorrichtung
- 110: Basiselement
- 112: Sensorträger
- 121: erster Einzentriersensor
- 122: zweiter Einzentriersensor
- 130: Markierungserfassungseinrichtung
- 131: (erster) Markierungssensor
- 132: zweiter Markierungssensor
- 140: Referenzvermessungseinrichtung (taktiler Sensor)
- 141: Tastspitze
- 142: Linearschlitten
- 151: Lagereferenztarget
- 152: Tangentiallagesensor
- 153: Radiallagesensor
- 154: Axiallagesensor
- 210: Signal des ersten Markierungssensors
- 211: Peak
- 220: Signal des zweiten Markierungssensors
- 230: Differenzsignal
- 231: Positionssignal
- 301: Referenzzahnlücke
- 302: korrespondierende Zahnlücke
- 310: Maschinenbett
- 311: horizontaler Abschnitt
- 312: vertikaler Abschnitt
- 320: Z-Schlitten
- 322: X-Schlitten / Werkzeugträger
- 340: Y-Schlitten / Werkstückträger
- C, C1: Werkstückachse
- C3: Schwenkachse Turm
- C5: horizontale Schwenkachse
- C6: vertikale Schwenkachse
- C7: horizontale Schwenkachse
- E: Einführrichtung
- M: Markierungserfassungsrichtung
- R: radiale Messrichtung
- T: Tangentialrichtung
- V: Verschieberichtung
- X, Y, Z: Linearachsen

## Patentansprüche

1. Verfahren zum Bearbeiten eines Werkstücks (60), das eine erste und zweite Verzahnung (61, 62) aufweist, wobei das Werkstück (60) um eine Werkstückachse (C1) drehbar aufgespannt ist, **dadurch gekennzeichnet, dass** das Verfahren umfasst:
Identifizieren mindestens einer Referenzzahnstruktur der ersten Verzahnung (61) mit einer berührungslos arbeitenden Referenzidentifikationseinrichtung;
Vermessen der mindestens einen Referenzzahnstruktur mit einer Referenzvermessungseinrichtung (140), um eine Referenzdrehwinkellage des Werkstücks (60) zu ermitteln; und
Bearbeiten der zweiten Verzahnung (62) mit einem Bearbeitungswerkzeug (31) derart, dass die zweite Verzahnung (62) eine Drehwinkellage erhält, die in einer vorbestimmten Beziehung zur ermittelten Referenzdrehwinkellage steht,
wobei die Referenzvermessungseinrichtung (140) einen taktilen Sensor oder einen optischen Sensor umfasst,
wobei für den Fall, dass die Referenzvermessungseinrichtung (140) einen taktilen Sensor umfasst, der taktile Sensor eine Sensorbasis und eine Tastspitze (141) aufweist.

2. Verfahren nach Anspruch 1, wobei das Werkstück (60) eine Markierung (63) aufweist, wobei die Referenzidentifikationseinrichtung eine berührungslos arbeitende Markierungserfassungseinrichtung (130) umfasst, und wobei das Identifizieren der mindestens einer Referenzzahnstruktur der ersten Verzahnung (61) umfasst:
Erfassen der Markierung (63) des Werkstücks (60) mit der Markierungserfassungseinrichtung (130); und
Identifizieren der mindestens einen Referenzzahnstruktur der ersten Verzahnung (61) anhand der erfassten Markierung (63),
wobei die Markierungserfassungseinrichtung (130) vorzugsweise einen ersten und zweiten Markierungssensor (131, 132) aufweist, und wobei das Erfassen der Markierung (63) vorzugsweise eine Differenzbildung von Signalen des ersten und zweiten Markierungssensors (131, 132) umfasst.

3. Verfahren nach einem der vorhergehenden Ansprüche, wobei die Referenzidentifikationseinrichtung einen berührungslos arbeitenden ersten Einzentriersensor (121) und einen berührungslos arbeitenden zweiten Einzentriersensor (122) umfasst, und wobei das Identifizieren der mindestens einer Referenzzahnstruktur der ersten Verzahnung (61) umfasst:
Ermitteln von Drehwinkellagen von Zahnstrukturen der ersten Verzahnung (61) mit dem ersten Einzentriersensor (121);
Ermitteln von Drehwinkellagen von Zahnstrukturen der zweiten Verzahnung (62) mit dem zweiten Einzentriersensor (122);
Bestimmen von Drehwinkelabständen von Zahnstrukturen der ersten Verzahnung (61) zu Zahnstrukturen der zweiten Verzahnung (62) aus den ermittelten Drehwinkellagen; und
Identifizieren der mindestens einen Referenzzahnstruktur der ersten Verzahnung anhand eines Vergleichs der Drehwinkelabstände mit einem vorgegebenen Abstandssollwert.

4. Verfahren nach einem der vorhergehenden Ansprüche,
wobei für den Fall, dass die Referenzvermessungseinrichtung (140) einen taktilen Sensor umfasst, der eine Sensorbasis und eine Tastspitze (141) aufweist, die Tastspitze (141) gegenüber der Sensorbasis ausgefahren wird, um entlang einer Einführrichtung (E) in Eingriff mit der ersten Verzahnung (61) gebracht zu werden, oder der taktile Sensor gegenüber einem Sensorträger (112) verschoben oder verschwenkt wird, um den taktilen Sensor in Eingriff mit der ersten Verzahnung (61) zu bringen.

5. Verfahren nach einem der vorhergehenden Ansprüche, wobei die zweite Verzahnung (62) durch ein Wälzbearbeitungsverfahren bearbeitet wird, insbesondere durch ein Wälzschleifverfahren, und wobei ein Wälzkopplungswinkel für das Wälzbearbeitungsverfahren unter Verwendung der zuvor ermittelten Referenzdrehwinkellage des Werkstücks (60) festgelegt wird.

6. Verfahren nach einem der vorhergehenden Ansprüche, wobei die Referenzvermessungseinrichtung (140) an einem Sensorträger (112) angebracht ist, und wobei das Verfahren aufweist:
Bewegen des Sensorträgers (112) zwischen einer Parkstellung und einer Messstellung, insbesondere durch Verschwenken um eine vorzugsweise senkrecht oder parallel zur Werkstückachse (C1) verlaufende Schwenkachse (C5, C6) oder durch Verschieben entlang einer vorzugsweise radial oder parallel zur Werkstückachse (C1) verlaufenden Verschieberichtung (V),
wobei an dem Sensorträger (112) vorzugsweise mindestens eine weitere Sensoreinrichtung angebracht ist, insbesondere mindestens ein Teil der Referenzidentifikationseinrichtung, und/oder
wobei das Verfahren vorzugsweise aufweist:
Ermitteln einer Lage des Sensorträgers (112) bezüglich mindestens einer Raumrichtung, insbesondere einer Tangentialrichtung, Axialrichtung und/oder Radialrichtung, in der Messstellung mittels einer Lagereferenzvorrichtung (151, 152, 153, 154); und
Korrigieren der ermittelten Referenzdrehwinkellage anhand der ermittelten Lage des Sensorträgers (112).

7. Verfahren nach einem der vorhergehenden Ansprüche,
wobei die erste Verzahnung (61) und die zweite Verzahnung (62) Aussenverzahnungen sind;
wobei die erste Verzahnung (61) und die zweite Verzahnung (62) Innenverzahnungen sind;
wobei die erste Verzahnung (61) eine Innenverzahnung ist und die zweite Verzahnung (62) eine Aussenverzahnung ist; oder
wobei die erste Verzahnung (61) eine Aussenverzahnung ist und die zweite Verzahnung (62) eine Innenverzahnung ist.

8. Positioniervorrichtung (100) zum Ermitteln einer Referenzdrehwinkellage eines Werkstücks (60), **dadurch gekennzeichnet, dass** die Positioniervorrichtung zum Ermitteln einer Referenzdrehwinkellage eines Werkstücks (60), das eine erste und zweite Verzahnung (61, 62) aufweist, ausgebildet ist und dass die Positioniervorrichtung (100) aufweist:
eine Referenzidentifikationseinrichtung, die dazu ausgebildet ist, berührungslos mindestens eine Referenzzahnstruktur der ersten Verzahnung (61) zu identifizieren; und
eine Referenzvermessungseinrichtung (140), die dazu ausgebildet ist, die mit der Referenzidentifikationseinrichtung identifizierte Referenzzahnstruktur der ersten Verzahnung (61) zu vermessen, um die Referenzdrehwinkellage des Werkstücks (60) zu ermitteln,
a) wobei die Referenzvermessungseinrichtung (140) einen optischen Sensor umfasst oder
b) wobei die Referenzvermessungseinrichtung (140) einen taktilen Sensor umfasst, der eine Sensorbasis und eine Tastspitze (141) aufweist, und die Referenzidentifikationseinrichtung einen berührungslos arbeitenden ersten Einzentriersensor (121) zum Ermitteln von Drehwinkellagen von Zahnstrukturen der ersten Verzahnung (61) und einen berührungslos arbeitenden zweiten Einzentriersensor (122) zum Ermitteln von Drehwinkellagen von Zahnstrukturen der zweiten Verzahnung (62) aufweist.

9. Positioniervorrichtung (100) nach Anspruch 8, wobei die Referenzidentifikationseinrichtung eine Markierungserfassungseinrichtung (130) umfasst, die dazu ausgebildet ist, eine Markierung (63) des Werkstücks (60) berührungslos zu erfassen,
wobei die Markierungserfassungseinrichtung (130) vorzugsweise einen ersten und zweiten Markierungssensor (131, 132) aufweist, wobei die ersten und zweiten Markierungssensoren (131, 132) bezüglich einer Umfangsrichtung des Werkstücks (60) hintereinander oder nebeneinander angeordnet sind.

10. Positioniervorrichtung (100) nach Anspruch 8 oder 9, wobei für den Fall, dass die Referenzidentifikationseinrichtung einen berührungslos arbeitenden ersten Einzentriersensor (121) zum Ermitteln von Drehwinkellagen von Zahnstrukturen der ersten Verzahnung (61) und einen berührungslos arbeitenden zweiten Einzentriersensor (122) zum Ermitteln von Drehwinkellagen von Zahnstrukturen der zweiten Verzahnung (62) aufweist, der erste und/oder zweite Einzentriersensor (121, 122) entlang einer Umfangsrichtung des Werkstücks (60) versetzt zur Referenzvermessungseinrichtung (140) angeordnet ist.

11. Positioniervorrichtung (100) nach Anspruch 8 oder 9, wobei für den Fall, dass die Referenzvermessungseinrichtung (140) einen taktilen Sensor umfasst, der eine Sensorbasis und eine Tastspitze (141) aufweist, die Tastspitze (141) gegenüber der Sensorbasis ausfahrbar ist, um entlang einer Einführrichtung (E) mit der ersten Verzahnung (61) in Eingriff gebracht zu werden.

12. Positioniervorrichtung (100) nach einem der Ansprüche 8 bis 11, aufweisend einen Sensorträger (112), an dem die Referenzvermessungseinrichtung (140) angebracht ist,
wobei für den Fall, dass die Referenzvermessungseinrichtung (140) einen taktilen Sensor umfasst, der taktile Sensor vorzugsweise verschiebbar oder verschwenkbar am Sensorträger (112) angeordnet ist, um den taktilen Sensor in Eingriff mit der ersten Verzahnung (61) zu bringen,
wobei am Sensorträger (112) vorzugweise ausserdem mindestens ein Teil der Referenzidentifikationseinrichtung angebracht ist, und/oder
wobei der Sensorträger (112) vorzugsweise beweglich mit einem Basiselement (110) verbunden ist, um den Sensorträger (112) zwischen einer Parkstellung und einer Messstellung zu bewegen, insbesondere durch Verschwenken um eine vorzugsweise senkrecht oder parallel zur Werkstückachse (C1) verlaufende Schwenkachse (C5, C6) oder durch Verschieben entlang einer vorzugsweise radial oder parallel zur Werkstückachse (C1) verlaufenden Verschieberichtung (V),
wobei die Positioniervorrichtung (100) optional ausserdem eine Lagereferenzvorrichtung (151, 152, 153, 154) aufweist, um in der Messstellung eine Lage des Sensorträgers (112) bezüglich mindestens einer Raumrichtung zu ermitteln, insbesondere einer Tangentialrichtung, Axialrichtung und/oder Radialrichtung.

13. Werkzeugmaschine, aufweisend:
einen Werkstückträger (40); und
mindestens eine Werkstückspindel (50), die auf dem Werkstückträger (40) angeordnet ist und dazu ausgebildet ist, das Werkstück (60) zu einer Drehung um die Werkstückachse (C1) aufzunehmen,
**dadurch gekennzeichnet, dass** die Werkzeugmaschine eine Positioniervorrichtung (100) nach einem der Ansprüche 8 bis 12 aufweist.

14. Werkzeugmaschine nach Anspruch 13,
aufweisend ein Maschinenbett (10), wobei der Werkstückträger (40) gegenüber dem Maschinenbett (10) bewegbar, insbesondere um eine Werkstückträgerachse (C3) verschwenkbar, ist,
wobei die Positioniervorrichtung (100) gemäss Anspruch 12 ausgebildet ist, und
wobei der Sensorträger (112) beweglich mit dem Basiselement (110) verbunden ist und das Basiselement (110) am Maschinenbett (10) angeordnet ist, oder wobei der Sensorträger (112) in einem radial zwischen der Werkstückträgerachse (C3) und der Werkstückachse (C1) gelegenen Bereich am Werkstückträger (40) angeordnet ist.

15. Werkzeugmaschine nach Anspruch 13 oder 14, aufweisend:
eine Werkzeugspindel (30), die dazu ausgebildet ist, ein Bearbeitungswerkzeug (31) zu einer Drehung um eine Werkzeugachse aufzunehmen; und
eine Steuereinrichtung (70), die dazu ausgebildet ist, das Verfahren eines der Ansprüche 1 bis 7 auszuführen.

## Claims

1. A method of machining a workpiece (60) having first and second gearings (61, 62), the workpiece (60) being mounted for rotation about a workpiece axis (C1), **characterized in that** the method comprises:
identifying at least one reference tooth structure of the first gearing (61) with a reference identification device operating without contact;
measuring the at least one reference tooth structure with a reference measuring device (140) to determine a reference rotational angular position of the workpiece (60); and
machining the second gearing (62) with a machining tool (31) in such a way that the second gearing (62) obtains a rotational angle position that is in a predetermined relationship to the determined reference rotational angular position,
wherein the reference measuring device (140) comprises a tactile sensor or an optical sensor,
wherein in the case that the reference measuring device (140) comprises a tactile sensor, the tactile sensor comprises a sensor base and a probe tip (141).

2. The method of claim 1, wherein the workpiece (60) comprises a marking (63), wherein the reference identification device comprises a marking detection device (130) operating without contact, and wherein identifying the at least one reference tooth structure of the first gearing (61) comprises:
detecting the marking (63) of the workpiece (60) with the marking detection device (130); and
identifying the at least one reference tooth structure of the first gearing (61) by means of the detected marking (63),
wherein the marking detection device (130) preferably comprises first and second marking sensors (131, 132), wherein detecting the marking (63) preferably comprises forming a difference of signals from the first and second marking sensors (131, 132).

3. The method according to any one of the preceding claims, wherein the reference identification device comprises a non-contact first meshing sensor (121) and a non-contact second meshing sensor (122), and wherein identifying the at least one reference tooth structure of the first gearing (61) comprises:
determining rotational angular positions of tooth structures of the first gearing (61) with the first meshing sensor (121);
determining rotational angular positions of tooth structures of the second gearing (62) with the second meshing sensor (122);
determining rotational angular distances of tooth structures of the first gearing (61) to tooth structures of the second gearing (62) from the determined rotational angular positions; and
identifying the at least one reference tooth structure of the first gearing on the basis of a comparison of the rotational angular distances with a specified nominal distance.

4. The method according to any of the preceding claims,
wherein in the case that the reference measuring device (140) comprises a tactile sensor having a sensor base and a probe tip (141), the probe tip (141) is extended relative to the sensor base to be brought into engagement with the first gearing (61) along an insertion direction (E), or wherein the tactile sensor is displaced or pivoted relative to a sensor carrier (112) to bring the tactile sensor into engagement with the first gearing (61).

5. The method according to any one of the preceding claims, wherein the second gearing (62) is machined by a generating machining process, in particular by a generating grinding process, and wherein a rolling coupling angle for the generating machining process is determined using the previously determined reference rotational angle position of the workpiece (60).

6. The method according to any one of the preceding claims, wherein the reference measuring device (140) is mounted on a sensor carrier (112), and wherein the method comprises:
moving the sensor carrier (112) between a parking position and a measuring position, in particular by swiveling about a swivel axis (C5, C6) preferably extending perpendicularly or parallel to the workpiece axis (C1) or by displacement along a displacement direction (V) preferably extending radially or parallel to the workpiece axis (C1),
wherein preferably at least one further sensor device is attached to the sensor carrier (112), in particular at least part of the reference identification device, and/or
wherein the method preferably comprises:
determining a position of the sensor carrier (112) with respect to at least one spatial direction, in particular a tangential direction, an axial direction and/or a radial direction, in the measuring position by means of a position reference device (151, 152, 153, 154); and
correcting the determined reference rotational angular position using the determined position of the sensor carrier (112).

7. The method according to any of the preceding claims,
wherein the first gearing (61) and the second gearing (62) are external gearings;
wherein the first gearing (61) and the second gearing (62) are internal gearings;
wherein the first gearing (61) is an internal gearing and the second gearing (62) is an external gearing; or
wherein the first gearing (61) is an external gearing and the second gearing (62) is an internal gearing.

8. A positioning device (100) for determining a reference rotational angular position of a workpiece (60), **characterized in that** the positioning device is configured to determine a reference rotational angular position of a workpiece (60) having first and second gearings (61, 62), and **in that** the positioning device (100) comprises:
a reference identification device configured to identify at least one reference tooth structure of the first gearing (61) without contact; and
a reference measuring device (140) configured to measure the reference tooth structure of the first gearing (61) identified by the reference identification device to determine the reference rotational angular position of the workpiece (60),
a) wherein the reference measuring device (140) comprises an optical sensor, or
b) wherein the reference measuring device (140) comprises a tactile sensor having a sensor base and a probe tip (141), and wherein the reference identification device comprises a non-contact first meshing sensor (121) for determining rotational angular positions of tooth structures of the first gearing (61) and a non-contact second meshing sensor (122) for determining rotational angular positions of tooth structures of the second gearing (62).

9. The positioning apparatus (100) of claim 8, wherein the reference identification device comprises a marking detection device (130) configured to detect a marking (63) of the workpiece (60) without contact,
wherein the marking detection device (130) preferably comprises first and second marking sensors (131, 132), the first and second marking sensors (131, 132) being arranged sequentially or side by side with respect to a circumferential direction of the workpiece (60).

10. The positioning device (100) according to claim 8 or 9, wherein in the case that the reference identification device comprises a non-contact first meshing sensor (121) for determining rotational angular positions of tooth structures of the first gearing (61) and a non-contact second meshing sensor (122) for determining rotational angular positions of tooth structures of the second gearing (62), the first and/or the second meshing sensor (121,122) are arranged offset from the reference measuring device (140) along a circumferential direction of the workpiece (60).

11. The positioning device (100) according to claim 8 or 9,
wherein, in the case that the reference measuring device (140) comprises a tactile sensor having a sensor base and a probe tip (141), the probe tip (141) is extendable relative to the sensor base to be engaged with the first gearing (61) along an insertion direction (E).

12. The positioning device (100) according to any one of claims 8 to 11, comprising a sensor carrier (112) to which the reference measuring device (140) is attached,
wherein, in the case that the reference measuring device (140) comprises a tactile sensor, the tactile sensor is preferably displaceably or pivotably arranged on the sensor carrier (112) to bring the tactile sensor into engagement with the first gearing (61),
wherein at least part of the reference identification device is preferably attached to the sensor carrier (112) and/or
wherein the sensor carrier (112) is preferably movably connected to a base element (110) in order to move the sensor carrier (112) between a parking position and a measuring position, in particular by swiveling about a swivel axis (C5, C6) preferably extending perpendicularly or parallel to the workpiece axis (C1) or by displacement along a displacement direction (V) preferably extending radially or parallel to the workpiece axis (C1),
wherein the positioning device (100) optionally further comprises a position reference device (151, 152, 153, 154) for determining a position of the sensor carrier (112) with respect to at least one spatial direction, in particular a tangential direction, axial direction and/or radial direction, in the measuring position.

13. A machine tool, comprising:
a workpiece carrier (40); and
at least one workpiece spindle (50) arranged on the workpiece carrier (40) and configured to receive the workpiece (60) for rotation about the workpiece axis (C1),
**characterized in that** the machine tool comprises a positioning device (100) according to any one of claims 8 to 12.

14. The machine tool according to claim 13,
comprising a machine bed (10), wherein the workpiece carrier (40) is movable relative to the machine bed (10), in particular pivotable about a workpiece carrier axis (C3),
wherein the positioning device (100) is configured according to claim 12, and
wherein the sensor carrier (112) is movably connected to the base element (110) and the base element (110) is arranged on the machine bed (10), or wherein the sensor carrier (112) is arranged on the workpiece carrier (40) in a region located radially between the workpiece carrier axis (C3) and the workpiece axis (C1).

15. The machine tool according to claim 13 or 14, comprising:
a tool spindle (30) adapted to receive a machining tool (31) for rotation about a tool axis; and
a control device (70) adapted to perform the method of any one of claims 1 to 7.

## Revendications

1. Procédé d'usinage d'une pièce à usiner (60) qui présente une première et une deuxième denture (61, 62), la pièce (60) étant serrée de manière à pouvoir tourner autour d'un axe de pièce (C1), **caractérisé en ce que** le procédé comprend :
identifier au moins une structure de dent de référence de la première denture (61) avec un dispositif d'identification de référence fonctionnant sans contact ;
mesurer l'au moins une structure de dent de référence avec un dispositif de mesure de référence (140) afin de déterminer une position angulaire de rotation de référence de la pièce à usiner (60) ; et
usiner la deuxième denture (62) avec un outil d'usinage (31) de telle sorte que la deuxième denture (62) obtienne une position angulaire de rotation qui est dans une relation prédéterminée avec la position angulaire de rotation de référence déterminée,
le dispositif de mesure de référence (140) comprenant un capteur tactile ou un capteur optique,
dans le cas où le dispositif de mesure de référence (140) comprend un capteur tactile, le capteur tactile comprenant une base de capteur et une pointe de palpage (141).

2. Procédé selon la revendication 1, dans lequel la pièce à usiner (60) comporte un marquage (63), dans lequel le dispositif d'identification de référence comprend un dispositif de détection de marquage (130) fonctionnant sans contact, et dans lequel l'identification de l'au moins une structure de dent de référence de la première denture (61) comprend :
détecter le marquage (63) de la pièce à usiner (60) à l'aide du dispositif de détection de marquage (130) ; et
identifier l'au moins une structure de dent de référence de la première denture (61) à l'aide du marquage détecté (63),
le dispositif de détection de marquage (130) comprenant de préférence un premier et un deuxième capteur de marquage (131, 132), et la détection de la marquage (63) comprenant de préférence une formation de différence de signaux du premier et du deuxième capteur de marquage (131, 132).

3. Procédé selon l'une quelconque des revendications précédentes, dans lequel le dispositif d'identification de référence comprend un premier capteur d'engrènement (121) fonctionnant sans contact et un deuxième capteur d'engrènement (122) fonctionnant sans contact, et dans lequel l'identification de ladite au moins une structure de dent de référence de la première denture (61) comprend :
déterminer des positions angulaires de rotation de structures dentées de la première denture (61) avec le premier capteur de capteur d'engrènement (121) ;
déterminer des positions angulaires de rotation de structures dentées de la deuxième denture (62) avec le deuxième capteur d'engrènement (122) ;
déterminer des distances angulaires de rotation entre les structures dentées de la première denture (61) et les structures dentées de la deuxième denture (62) à partir des positions angulaires de rotation déterminées ; et
identifier l'au moins une structure de dent de référence de la première denture à l'aide d'une comparaison des distances angulaires de rotation avec une valeur de consigne de distance prédéterminée.

4. Procédé selon l'une quelconque des revendications précédentes,
dans lequel, dans le cas où le dispositif de mesure de référence (140) comprend un capteur tactile comprenant une base de capteur et une pointe de palpage (141), la pointe de palpage (141) est déployée par rapport à la base de capteur pour être amenée en prise avec la première denture (61) le long d'une direction d'introduction (E), ou le capteur tactile est déplacé ou pivoté par rapport à un support de capteur (112) pour amener le capteur tactile en prise avec la première denture (61).

5. Procédé selon l'une quelconque des revendications précédentes, dans lequel la deuxième denture (62) est usinée par un procédé d'usinage par génération, en particulier par un procédé de rectification par génération, et dans lequel un angle de couplage de génération pour le procédé d'usinage par génération est déterminé en utilisant la position angulaire de rotation de référence de la pièce à usiner (60) déterminée au préalable.

6. Procédé selon l'une quelconque des revendications précédentes, dans lequel le dispositif de mesure de référence (140) est monté sur un support de capteur (112), et dans lequel le procédé comprend :
déplacer le support de capteur (112) entre une position de stationnement et une position de mesure, notamment par pivotement autour d'un axe de pivotement (C5, C6) s'étendant de préférence perpendiculairement ou parallèlement à l'axe de pièce (C1) ou par translation le long d'une direction de translation (V) s'étendant de préférence radialement ou parallèlement à l'axe de pièce (C1),
au moins un autre dispositif de détection étant de préférence monté sur le support de détecteur (112), en particulier au moins une partie du dispositif d'identification de référence, et/ou
le procédé comprenant de préférence
déterminer une position du support de capteur (112) par rapport à au moins une direction spatiale, en particulier une direction tangentielle, une direction axiale et/ou une direction radiale, dans la position de mesure au moyen d'un dispositif de référence de position (151, 152, 153, 154) ; et
corriger la position angulaire de référence déterminée à l'aide de la position déterminée du support de capteur (112).

7. Procédé selon l'une quelconque des revendications précédentes,
la première denture (61) et la deuxième denture (62) étant des dentures extérieures ;
la première denture (61) et la deuxième denture (62) étant des dentures intérieures ;
la première denture (61) étant une denture intérieure et la deuxième denture (62) étant une denture extérieure ; ou
la première denture (61) étant une denture extérieure et la deuxième denture (62) étant une denture intérieure
a) dans lequel le dispositif de mesure de référence (140) comprend un capteur optique, ou
b) dans lequel le dispositif de mesure de référence (140) comprend un capteur tactile comprenant une base de capteur et une pointe de palpage (141), et dans lequel le dispositif d'identification de référence comprend un premier capteur d'engrènement (121) fonctionnant sans contact pour déterminer les positions angulaires de rotation de structures dentées de la première denture (61) et un deuxième capteur d'engrènement (122) fonctionnant sans contact pour déterminer les positions angulaires de rotation de structures dentées de la deuxième denture (62),

8. Dispositif de positionnement (100) pour déterminer une position angulaire de rotation de référence d'une pièce à usiner (60), **caractérisé en ce que** le dispositif de positionnement est conçu pour déterminer une position angulaire de rotation de référence d'une pièce à usiner (60) qui présente une première et une deuxième denture (61, 62) et **en ce que** le dispositif de positionnement (100) présente :
un dispositif d'identification de référence, qui est conçu pour identifier sans contact au moins une structure de dent de référence de la première denture (61) ; et
un dispositif de mesure de référence (140) qui est conçu pour mesurer la structure de dents de référence de la première denture (61) identifiée avec le dispositif d'identification de référence, afin de déterminer la position angulaire de rotation de référence de la pièce à usiner (60).

9. Dispositif de positionnement (100) selon la revendication 8, dans lequel le dispositif d'identification de référence comprend un dispositif de détection de marquage (130) qui est conçu pour détecter sans contact un marquage (63) de la pièce à usiner (60),
le dispositif de détection de marquage (130) présentant de préférence un premier et un deuxième capteur de marquage (131, 132), les premier et deuxième capteurs de marquage (131, 132) étant disposés l'un derrière l'autre ou l'un à côté de l'autre par rapport à une direction circonférentielle de la pièce à usiner (60).

10. Dispositif de positionnement (100) selon la revendication 8 ou 9, dans lequel dans le cas où le dispositif d'identification de référence comprend :
un premier capteur d'engrènement (121) fonctionnant sans contact pour déterminer les positions angulaires de rotation de structures dentées de la première denture (61) ; et
un deuxième capteur d'engrènement (122) fonctionnant sans contact pour déterminer les positions angulaires de rotation de structures dentées de la deuxième denture (62),
le premier et/ou le deuxième capteur d'engrènement (121, 122) est décalé par rapport au dispositif de mesure de référence (140) le long d'une direction circonférentielle de la pièce à usiner (60).

11. Dispositif de positionnement (100) selon l'une des revendications 8 ou 9,
dans lequel, dans le cas où le dispositif d'arpentage de référence (140) comprend un capteur tactile comprenant une base de capteur et une pointe de palpeur (141), la pointe de palpeur (141) peut être déployée par rapport à la base de capteur pour être mise en prise avec la première denture (61) le long d'une direction d'insertion (E).

12. Dispositif de positionnement (100) selon l'une des revendications 8 à 11, comprenant un support de capteur (112) sur lequel est monté le dispositif de mesure de référence (140),
dans lequel, dans le cas où le dispositif de mesure de référence (140) comprend un capteur tactile, le capteur tactile est disposé de préférence de manière à pouvoir être déplacé ou pivoté sur le support de capteur (112) afin d'amener le capteur tactile en prise avec la première denture (61),
de préférence, au moins une partie du dispositif d'identification de référence étant en outre montée sur le support de capteur (112), et/ou
le support de capteur (112) étant relié de préférence de manière mobile à un élément de base (110) pour déplacer le support de capteur (112) entre une position de stationnement et une position de mesure, en particulier par pivotement autour d'un axe de pivotement (C5, C6) s'étendant de préférence perpendiculairement ou parallèlement à l'axe de pièce (C1) ou par translation le long d'une direction de translation (V) s'étendant de préférence radialement ou parallèlement à l'axe de pièce (C1),
le dispositif de positionnement (100) présentant en outre, en option, un dispositif de référence de position (151, 152, 153, 154), afin de déterminer, dans la position de mesure, une position du support de capteur (112) par rapport à au moins une direction spatiale, en particulier une direction tangentielle, une direction axiale et/ou une direction radiale.

13. Machine-outil, comprenant
un porte-pièce (40) ; et
au moins une broche porte-pièce (50) qui est disposée sur le porte-pièce (40) et qui est conçue pour recevoir la pièce à usiner (60) en vue d'une rotation autour de l'axe (C1) de la pièce,
**caractérisé en ce que** la machine-outil comprend un dispositif de positionnement (100) selon l'une des revendications 8 à 12.

14. Machine-outil selon la revendication 13,
présentant un banc de machine (10), le porte-pièce (40) étant mobile par rapport au banc de machine (10), en particulier pivotable autour d'un axe de porte-pièce (C3),
le dispositif de positionnement (100) étant conçu selon la revendication 12, et
le support de capteur (112) étant relié de manière mobile à l'élément de base (110) et l'élément de base (110) étant disposé sur le banc de machine (10), ou le support de capteur (112) étant disposé sur le porte-pièce (40) dans une zone située radialement entre l'axe (C3) du porte-pièce et l'axe (C1) de la pièce à usiner.

15. Machine-outil selon la revendication 13 ou 14, comprenant :
une broche porte-outil (30) adaptée pour recevoir un outil d'usinage (31) en vue d'une rotation autour d'un axe d'outil ; et
un dispositif de commande (70) conçu pour effectuer le procédé de l'une des revendications 1 à 7.
